# EUROPÄISCHE PATENTSCHRIFT

(11) **EP 2 243 048 B1**
(45) Veröffentlichungstag und Bekanntmachung des Hinweises auf die Patenterteilung: **24.04.2019**
(21) Anmeldenummer: 09710583.7
(22) Anmeldetag: 03.02.2009
(51) Int. Cl.: G02B 6/00

(54) **SEITENEMITTIERENDE STUFENINDEXFASER, METHODE DER HERSTELLUNG, UND VERWENDUNG SELBIGER**
LATERALLY EMITTING STEP INDEX FIBER, METHOD OF MANUFACTURING, AND USE THEROF
FIBRE À SAUT D'INDICE À ÉMISSION LATÉRALE, PROCÉDÉ DE SA FABRICATION, ET UTILISATION

(30) Priorität: 14.02.2008 DE 102008009139; 14.02.2008 DE 102008009137; 25.07.2008 DE 102008034791
(43) Veröffentlichungstag der Anmeldung: 27.10.2010
(73) Patentinhaber: Schott AG, 55122 Mainz (DE)
(72) Erfinder: RITTER, Simone, Monika, 55131 Mainz (DE); HENZE, Inka, 55268 Nieder-Olm (DE); WOLFF, Detlef, 55276 Oppenheim (DE); ALKEMPER, Jochen, 55270 Klein-Winternheim (DE); HOPPE, Bernd, 55218 Ingelheim (DE); SCHULTHEIS, Bernd, 55270 Schwabenheim (DE); CURDT, Axel, 65388 Schlangenbad (DE)
(86) Internationale Anmeldenummer: PCT/EP2009/000702
(87) Internationale Veröffentlichungsnummer: WO 2009/100834

(56) Entgegenhaltungen:
- EP-A- 0 895 104
- EP-A- 1 705 157
- WO-A-2008/024397
- JP-A- 11 084 136
- JP-A- 57 207 204
- JP-A- S63 199 303
- JP-A- 2000 137 119
- JP-A- 2007 272 070
- LV-B- 11 644
- US-A1- 2003 128 944
- US-B1- 6 519 401
- SCHOTT SpectraStream Glass Harnesses Product Information 11/06

## Beschreibung

Die Erfindung betrifft seitenemittierende Stufenindexfasern, Verfahren zu deren Herstellung sowie deren Anwendungen.

Als Stufenindexfasern werden lichtleitende Fasern verstanden, wobei die Lichtleitung in dem Faserkern durch Totalreflektion des in dem Kern geleiteten Lichts an dem den Faserkern entlang der Faserachse umschließenden Mantel erfolgt. Die Totalreflektion tritt dann auf, wenn der Mantel einen niedrigeren Brechungsindex aufweist als der das Licht leitende Faserkern. Allerdings ist die Bedingung der Totalreflektion nur bis zu einem Grenzwinkel des auf den Mantel treffenden Lichts möglich, der von den Brechungsindices von Kern und Mantel abhängig ist. Der Grenzwinkel β_{Min}, d.h. der kleinste Winkel, bei dem noch die Totalreflektion auftritt, kann berechnet werden durch sin(β_{Min}) = n₂ / n₁, wobei β_{Min} von einer Ebene senkrecht zur Faserachse gemessen wird, n₁ den Brechungsindex des Faserkerns und n₂ den Brechungsindex des Mantels repräsentiert.

Im allgemeinen wird eine möglichst gute Führung des Lichts in der Faser angestrebt, d.h. es soll möglichst wenig Licht bei der Einkopplung in die Faser und bei dem Transport in der Faser verloren gehen. Eine seitenemittierende Stufenindexfaser ist eine Stufenindexfaser, bei der absichtlich Licht aus dem Faserkern und aus der Faser ausgekoppelt wird. Im allgemeinen ist eine gleichmäßige Auskopplung erwünscht, welche eine seitenemittierende Stufenindexfaser im Idealfall als ein gleichmäßig leuchtendes Band oder Linie erscheinen lassen. Dies macht sie für mannigfaltige Anwendungen insbesondere in der Beleuchtungstechnik interessant.

Seitenemittierend im Sinne der Erfindung heißt, dass die Faser in der Lage ist, Licht seitlich zu emittieren, unabhängig davon, ob sie im Betrieb ist, d.h. ob tatsächlich eine Lichtquelle angeschlossen und das Licht eingeschaltet ist.

Die Fasern werden wie allgemein bekannt mit Hilfe von Faserziehprozessen hergestellt, wobei zumindest die Preform des Faserkerns bis zur Erweichungstemperatur des Materials der Preform bzw. des Faserkerns oder darüber hinaus erwärmt und eine Faser ausgezogen wird. Die Prinzipien des Faserziehprozesses sind beispielsweise in den deutschen Patenten DE 103 44 205 B4 und DE 103 44 207 B3 ausführlich beschrieben.

Vielfältige Methoden zum Erzeugen des Effekts der Seitenemission sind aus dem Stand der Technik bekannt. Eine bekannte Methode ist, für eine Lichtauskopplung im Faserkern zu sorgen.

Die japanische Offenlegungsschrift JP 9258028 A2 offenbart seitenemittierende Stufenindexfasern, bei denen die Lichtauskopplung durch einen unrunden Kern erzeugt werden soll. Die Auskopplung erfolgt, wenn Licht unter Winkeln auf die Grenzfläche zwischen Faserkern und Mantel trifft, welche kleiner als der Grenzwinkel der Totalreflektion β_{Min} sind. Durch die beschriebenen unrunden Kerngeometrien, beispielsweise quadratische, dreieckige oder Sternformen, werden in dem Kern geometrische Bereiche erzeugt, in denen ansonsten durch Totalreflektion geleitetes Licht ausgekoppelt werden kann. Die Erzeugung von seitenemittierenden Fasern durch solche Kerngeometrien ist allerdings mit dem Problem behaftet, dass die Auskopplung des Lichts in diesem Fall sehr ineffizient ist. Das Licht wird in der Faser im wesentlichen unter sehr flachen Einfallswinkeln zum Mantel geleitet, und die beschriebenen Kerngeometrien erstrecken sich entlang der Faserachse. Demnach gibt es kaum Flächen, bei welchen β_{Min} unterschritten wird. Ferner ist es sehr aufwendig, die in der JP 9258028 A2 offenbarten Kerngeometrien für Fasern aus Glas einzusetzen, weil es sehr schwierig ist, entsprechende Preformen, wie sie für den Faserzug benötigt werden, herzustellen. Darüber hinaus ist gerade bei Glasfasern die Bruchfestigkeit solcher Fasern mit unrunden Faserkerndurchmessern stark herabgesetzt. Wahrscheinlich offenbart diese Schrift aus diesem Grund auch nur Fasern aus Polymeren.

Eine weitere Methode, das Licht aus dem Faserkern auszukoppeln, wird in der US 4,466,697 beschrieben. Demnach werden Licht reflektierende und/oder streuende Partikel in den Faserkern gemischt. Hierbei gestaltet es sich schwierig, längere Fasern mit gleichmäßig seitenemittierenden Eigenschaften herzustellen, da die Lichtleitung im Kern durch die beigegebenen Partikel im Kern durch Absorption abgeschwächt wird, da es keine vollständig streuenden Partikel gibt, sondern nur solche, die nur nahezu das gesamte auftreffende Licht streuen. Weil die Wahrscheinlichkeit bei gleichmäßig im Kern verteilten Partikeln sehr hoch ist, dass das im Kern geführte Licht auf solche Partikel trifft, ist auch die Absorptionswahrscheinlichkeit sehr hoch, selbst wenn die Gesamtzahl der Partikel klein ist. Dadurch ist der Auskopplungseffekt auch nur sehr schwer zu skalieren, was reproduzierbare Ergebnisse im Faserzug zumindest für Fasern über 3 m Länge extrem aufwendig bis nahezu unmöglich werden lässt, zumindest, solange Glasfasern hergestellt werden sollen.

Unter Skalierbarkeit im Sinne der vorliegenden Offenbarung wird die Möglichkeit des gezielten Einstellens des Seitenemissionseffekts über die Länge der Faser verstanden. Dies ist notwendig, weil Faserlängen für verschiedene Anwendungen sehr stark variieren können, aber eine möglichst gleichmäßige Intensität des Leuchtens über die gesamte Faserlänge erzielt werden soll.

Alternativ zur Auskopplung des Lichts direkt aus dem Faserkern können seitenemittierende Eigenschaften bei Fasern auch durch Effekte in der Grenzfläche zwischen Faserkern und Mantel oder im Mantel selbst verursacht werden. So ist es aus dem Stand der Technik bekannt, dass Kristallisationsreaktionen zwischen Kern- und Mantelgläsern unerwünscht sind, da die Kristallite in der Grenzfläche zwischen Kern und Mantel als Streuzentren dienen können, so dass Licht aus der Faser auskoppelt und somit ihre Lichtleitfähigkeit herabsetzt. Dieser Effekt ist bei Lichtleitfasern im allgemeinen unerwünscht, und Glasfasern werden wie in dem deutschen Patent DE 102 45 987 B3 beschrieben üblicherweise gezielt dahingehend entwickelt, dass eine Kristallisation zwischen Kern und Mantel nicht stattfindet. Allerdings wäre es denkbar, dass die Kristallisation zwischen Kern und Mantel gezielt dazu eingesetzt wird, um seitenemittierende Eigenschaften zu erzeugen. Die Kristallisation tritt während des Faserzugs auf, wenn Kern und Mantel miteinander verschmelzen und die Faser wieder abkühlt. Es hat sich in Versuchen allerdings herausgestellt, dass der Kristallisationsprozeß während des Faserzugs nur schwer einzustellen und zu beherrschen ist, so dass eine reproduzierbare und skalierbare Produktion von seitenemittierenden Glasfasern, deren seitenemittierende Eigenschaften auf dem Vorliegen von Kristalliten in der Grenzfläche zwischen Kern und Mantel beruhen, bisher noch nicht in wirtschaftlicher Weise geglückt ist.

Zur Erzeugung seitenemittierender Eigenschaften aufgrund von Streuzentren in der Grenzfläche zwischen Kern und Mantel wird gemäß der Patentschrift LV 11644 B für Quartzglasfasern vorgeschlagen, eine Beschichtung auf der ausgezogenen Quartzglasfaser aufzubringen, die streuende Partikel enthält. Der äußere Schutzmantel um die Quartzglasfaser kann anschließend appliziert werden. Wie bei Quartzglasfasern üblich, bestehen die Beschichtungen sowohl der streuenden Schicht als auch des äußeren Mantels aus Kunststoffen. Dies hat den Nachteil, dass der ausgezogene Faserkern weiteren Beschichtungsschritten unterzogen werden muß und währenddessen ungeschützt ist. Schmutzpartikel, die sich zwischen Kern und Beschichtung setzen, führen zu möglichen Bruchstellen und/oder zu Punkten mit starker Lichtauskopplung. Quartfasern sind als solche aufgrund des Materials sowieso schon extrem teuer, aber das in dieser Schrift benötigte aufwendige Fertigungsverfahren verteuert diese noch zusätzlich.

Die US 2005/0074216 A1 offenbart eine seitenemittierende Faser mit einem transparenten Kern aus Kunststoff, der zuerst einen transparenten ersten Mantel und danach einen zweiten Mantel besitzt, beide ebenfalls aus Kunststoff. In den zweiten Mantel, welcher der äußere Mantel ist, sind Streupartikel eingelagert. Diese Methode ist nur bei Fasern mit sehr großen Kerndurchmessern von 4 mm oder mehr möglich, weil das im Faserkern geleitete Licht durch die zwangsläufig an der sehr großen Grenzfläche zwischen Kern und erstem Mantel vorliegenden Inhomogenitäten ausgekoppelt werden muss. Der zweite Mantel mit den eingelagerten Streupartikeln dient in diesem Fall dem Homogenisieren des ausgekoppelten Lichts über alle Raumwinkel. Fasern mit solch großem Kerndurchmesser sind allerdings wenig flexibel und können daher nur schwer verlegt werden. Aus Glas sind solche Ausführungsformen nur als starre Lichtleitstäbe herstellbar und vollkommen unflexibel.

Die JP2007272070 A2 offenbart die Bereitstellung einer lichtemittierenden optischen Faser, die einen Kern, einen Mantel, der den Kern umschließt, mit einem Brechungsindex, der niedriger als der des Kerns ist, sowie Lichtauskopplungsabschnitte, deren Brechungsindex grösser als der des Mantels und kleiner als der des Kerns ist. Die Lichtauskopplungsabschnitte werden durch Verunreinigungen auf der Innenseite des Mantels gebildet. Aus technischer Sicht ist hier die Brechungsindexwahl für eine seitenemittierende Stufenindexfaser nachteilig. Es kommt damit an den entsprechenden Grenzflächen bzw. Übergängen zwischen Kern, Lichtauskopplungsabschnitten und Mantel vermehrt zu Totalreflektion in das Innere der Faser hinein. Dadurch ist die seitliche Auskopplung von Licht wenig effektiv.

In der JP63199303 A2 wird eine seitlich emittierende optische Faser, und ein Herstellungsverfahren beschrieben. Die seitliche Emission der optischen Faser wird dadurch erreicht, dass eine Schicht mit einer fluktuierenden Fluordotierungskonzentration in der Nähe der Kern / Mantelgrenze gebildet wird. Dabei kann der Brechungsindex des Kerns n1 grösser als der des Mantels n2, sowie der der fluktuierenden Schicht kleiner als n1 sein. Die Relation von n2 und n3 ist unklar und damit auch die gesamte Relation der Brechungsindices und damit der Effizienz der seitlichen Lichtauskopplung.

Ein schwerwiegender Nachteil bei allen beschriebenen Lösungen, die Kunststoff enthalten, ist ferner, dass die beschriebenen Kunststoffmäntel allesamt brennbar sind. Daher sollten solche Fasern allgemein unerwünscht sein. Davon abgesehen können sie zumindest in Bereichen mit erhöhten Brandschutzbestimmungen, beispielsweise innerhalb von Flugzeugkabinen, nicht zugelassen werden.

Glasfasern sind als solche nicht brennbar. Seitenemittierende Glasfasern sind allerdings ebenfalls bereits bekannt. Die etablierte Methode zur Herstellung von Glasfasern mit seitenemittierenden Eigenschaften sieht vor, die Preform des Faserkerns durch Schleifen oder Sandstrahlen aufzurauhen. Durch diese Bearbeitungsprozesse werden auf der Umfangsfläche des Faserkerns in den Faserkern hineinragende Strukturen geschaffen, welche das geleitete Licht auskoppeln sollen. Auch hier hat sich gezeigt, dass der Prozeß zum Erzeugen der Seitenemission ineffizient und auch nur schwer skalierbar ist. Darüber hinaus ist das Bearbeiten von Preformen, insbesondere wenn diese aus Glas bestehen, oftmals teuer und aufwendig. Die in den Faserkern hineinragenden Strukturen stellen darüber hinaus Verletzungen des Faserkerns dar, von denen bei Biegebelastungen Belastungsspitzen und dadurch Risse ausgehen können, wodurch solche Fasern unter einer verminderten Bruchfestigkeit leiden. Auch deshalb erscheint diese Technik verbesserungswürdig.

Vor diesem Hintergrund ist es eine Aufgabe der Erfindung, eine seitenemittierende Stufenindexfaser bereit zu stellen, die wirtschaftlich zu produzieren ist, die effizient das Licht zur Seite auskoppelt, wobei der Effekt leicht skalierbar sein soll, und welche darüber hinaus nicht brennbar ist. Eine weitere Aufgabe der Erfindung ist es, ein Verfahren zur Herstellung eben solcher seitenemittierenden Fasern bereitzustellen, sowie Faserbündel beinhaltend solche seitenemittierende Fasern und deren Anwendungen.

Die Aufgabe und/oder die Teilaufgaben werden gelöst durch die unabhängigen Ansprüche. Bevorzugte Ausführungsformen ergeben sich aus den Unteransprüchen. Alternative Ausführungsformen sind ebenfalls in der vorliegenden Beschreibung genannt.

Eine erfindungsgemäße seitenemittierende Stufenindexfaser beinhaltet einen lichtleitenden Kern aus einem Glas mit dem Brechungsindex n₁ und einen den Kern entlang der Faserachse umschließenden transparenten und/oder transluzenten Mantel aus einem Glas mit dem Brechungsindex n₂, wobei n2 < n1 gilt. Dabei befindet sich zwischen Kern und Mantel zumindest ein Streubereich, der eine Matrix aus einem Glas, welches im wesentlichen einen Brechungsindex n₃ aufweist, und in die Matrix eingelagerte Streuzentren aufweist. Der Brechungsindex n₃ dieses Glases unterscheidet sich im wesentlichen von dem Brechungsindex n₂ des Mantelglases, wobei n3≥n1>n2 gilt. Dabei ist der Streubereich (3) ein verschmolzener Bereich mindestens eines Inlaystabes oder Inlayrohres, umfassend Glas mit dem Brechungsindex n3 und darin eingelagerte Streuzentren, mit einem Kernstab. Die Streuzentren sind Streupartikel oder inhomogene Bereiche des Glases, in welches sie eingelagert sind, wobei die inhomogenen Bereiche als phasengetrennte Bereiche oder entmischte Bereiche mit einem Brechungsindex n4 in dem Glas mit dem Brechungsindex n3 vorliegen.

Eine erfindungsgemäße seitenemittierende Stufenindexfaser kann flexibel oder auch starr sein.

Der Mantel umschließt wie bei Fasern üblich sowohl den Kern aber auch den oder die Streubereiche entlang der Faserachse vollständig. Der oder die Streubereiche liegen demnach auf der Oberfläche des Faserkerns, geschützt von dem Mantel.

Der Effekt der Seitenemission wird bei der vorliegenden Erfindung durch Streuung des in dem Kern geleiteten Lichts in einem im Verhältnis zum Kerndurchmesser dünnen Bereich zwischen Kern und Mantel erzeugt. Dazu befindet sich zwischen Kern und Mantel in unmittelbarem Kontakt zwischen beiden ein Streubereich, in welchem die Streuung stattfindet. Verantwortlich für die Streuung sind Streuzentren, welche in den Streubereich eingelagert sind. Im Sinne der Erfindung sind Streuzentren alle Partikel und/oder Materialagglomerationen und/oder inhomogene Bereiche, gleich welcher Form, welchen Materials und/oder welcher Größe, die das geleitete Licht streuen können. Die Streuzentren können durch klassische Streuung, insbes. Rayleigh- und/oder Mie-Streuung, ebenso wie durch Beugung und/oder Reflektion sowie Mehrfachprozessen dieser Mechanismen untereinander ihre streuende Wirkung entfalten. Ihre Funktion ist lediglich, individuell oder in ihrer Summe auftreffendes Licht abzulenken.

Durch die geeignete Wahl der Werte der Brechungsindices n₁, n₂ und n₃ kann das Auskoppelverhalten der seitenemittierenden Stufenindexfaser den jeweiligen Erfordernissen angepasst werden. Die Einlagerung der Streuzentren in einer Matrix aus Glas ist deshalb im Sinne der Erfindung auch deshalb notwendig, um sie überhaupt erst auf wirtschaftliche Weise auf dem Kern aufbringen zu können. Das Mantelglas mit dem Brechungsindex n₂ unterscheidet sich von dem Glas, in das die Streuzentren eingelagert sind. Daher unterscheidet sich der Brechungsindex n₃ im wesentlichen von n₂.

Der größte Effekt der Seitenemission lässt sich erzielen, wenn sich zwischen Kern und Mantel zumindest ein Streubereich befindet, der den Kern entlang der Faserachse vollständig umschließt. Dies bedeutet, dass sich der Streubereich über die gesamte Umfangsfläche des Faserkerns erstreckt. Der Mantel umschließt in diesem Fall seinerseits bevorzugt wiederum das gesamte Gebilde aus Kern und Streubereich. Bevorzugt sind in dieser Ausführungsform die Streuzentren homogen im Streubereich verteilt. Ein solcher Streubereich wird im Sinne der Erfindung beim Faserzug durch das Verschmelzen mehrerer Inlaystäbe erzeugt, welche aus einem Glasmaterial bestehen, in welches die Streuzentren eingelagert sind. Das Ziehverfahren und die Inlaystäbe werden im Zusammenhang mit der Beschreibung der Preform und des erfindungsgemäßen Herstellungsverfahrens näher erläutert. Durch die Verwendung der Inlaystäbe und der resultierenden Bildung eines um den Kern geschlossenen Streubereichs durch Verschmelzung von Inlaystäben kann auf die Verwendung eines Rohrs zur Herstellung der für den Faserzug verwendeten Preform für den Streubereich verzichtet werden. Dies ist vorteilhaft, weil somit diese Preform nicht durch einen Rohrzug eines Glases hergestellt werden muß, in welches Streuzentren eingelagert sind. Die Verwendung eines Glasrohres mit eingelagerten Streuzentren ist dennoch alternativ möglich und von der Erfindung umfasst, kann aber teurer als die Herstellungsvariante über Inlaystäbe sein weil, eine Rohrzuganlage ausschließlich für das Herstellen dieser mit Streupartikel versehenen Preformen benötigt würde, da in auch für übliche Glasrohre eingesetzten Rohrzuganlagen Streuzentren üblicherweise unerwünscht wären und im Beispiel von Streupartikeln als Streuzentren deren Zusatz die gesamte Anlage kontaminieren würde. Durch den Verzicht auf eine solche rohrförmige Preform ist die erfindungsgemäße seitenemittierende Faser besonders wirtschaftlich herzustellen.

Eine weitere bevorzugte Ausführungsform sieht vor, dass sich zwischen Kern und Mantel zumindest ein Streubereich befindet, der den Kern in einem Teilbereich entlang der Faserachse vollumfänglich umschließt.

Dies bedeutet in anderen Worten, dass die Streuzentren nur in Teilen des Matrixglases eingelagert sind, wobei diese Teile den Kern ringförmig umschließen. Ist der Abstand zwischen Bereichen, in denen Streuzentren vorliegen und solchen, die keine Streuzentren aufweisen ausreichend groß, kann gezielt eine seitenemittierende Faser hergestellt werden, welche in manchen Bereichen den Emissionseffekt zeigt und in anderen Bereichen nicht. Eine solche Faser kann vorteilhaft sein, um einen entsprechenden Designeffekt zu erzielen, oder aber das Licht erst einmal mit möglichst wenig Verlust durch den Bereich ohne den Seitenemissionseffekt zu dem Ort zu leiten, an dem die Seitenemission stattfinden soll. Dies ermöglicht die Trennung von Lichtquelle, welche in die Faser eingekoppelt werden soll, und dem Beleuchtungsort. Fasern dieses Typs können hergestellt werden, wenn Inlaystäbe oder Glasrohre verwendet werden, in die nur in Teilbereichen entlang ihrer Achse Streuzentren eingelagert sind. Beim Faserzug verschmilzt allerdings auch der nicht mit Streuzentren dotierte Bereich der Inlaystäbe und/oder Glasrohre mit dem Faserkern, so dass der Betrag der Summe aus Kerndurchmesser und Dicke des Streubereichs ohne eingelagerte Streuzentren und mit eingelagerten Streupartikeln bevorzugt über die gesamte Faserlänge im wesentlichen gleich bleibt.

In einer besonders bevorzugten Ausführungsform weist die seitenemittierende Stufenindexfaser zumindest einen diskreten Streubereich zwischen Kern und Mantel auf, der sich auf einem Teilbereich des Kernumfangs entlang der Faserachse erstreckt. Dies bedeutet, dass sich in diesem Fall zumindest ein Streubereich entlang der Faserachse oder Teilbereichen der Faserachse entlang erstreckt, aber die Faser nicht vollständig umschließt. Solche Streubereiche können erzeugt werden, wenn die Inlaystäbe beim Faserzug überhaupt nicht oder nicht vollständig miteinander verschmelzen. Die Erzeugung solcher diskreter Streubereiche lässt sich durch die Anzahl und/oder den Durchmesser und somit dem Volumen der verwendeten Inlaystäbe einstellen. In dieser Ausführungsform existiert demnach zumindest ein sich entlang der Faserachse erstreckender Bereich auf der Umfangsfläche des Kerns, welcher auch nicht mit dem Material belegt ist, in welches ansonsten die Streuzentren eingelagert sind. Selbstverständlich ist es aber auch möglich, dass der oder die sich entlang der Faserachse erstreckenden diskreten Streubereiche wie bzgl. der vorhergehenden Ausführungsform beschrieben entlang der Faserachse Bereiche aufweisen, in denen keine Streuzentren eingelagert sind, so dass die erfindungsgemäße Faser in diesem Fall nicht über ihre gesamte Länge den Seitenemissionseffekt aufweist, so dass beispielsweise alternierend Bereiche mit Seitenemission auf Bereiche ohne Seitenemission folgen.

Die Lichtauskopplung der seitenemittierenden Stufenindexfaser lässt sich bevorzugt durch die Anzahl der sich im wesentlichen entlang der Faserachse erstreckenden diskreten Streubereiche skalieren. Da in der Regel eine effiziente seitliche Auskopplung aus der Faser gewünscht wird, weist eine besonders bevorzugte erfindungsgemäße seitenemittierende Stufenindexfaser zwischen Kern und Mantel mehrere diskrete Streubereiche auf, die sich jeweils auf einem Teilbereich des Kernumfangs entlang der Faserachse erstrecken. Bevorzugt beträgt die Zahl der diskreten Streubereiche von 1 bis 50, besonders bevorzugt von 1 bis 10.

Als Streuzentren können entweder Streupartikel in das Glas eingelagert werden, oder aber die Streuzentren werden durch inhomogene Bereiche des Glases gebildet, in das sie eingelagert sind.

Im Fall des Einsatzes von Streupartikeln als Streuzentren werden bevorzugt Streupartikel verwendet, deren Schmelztemperatur größer ist als die Schmelztemperatur des Glases, in welches sie eingebettet sind. Weil die Streupartikel in diesem Fall zumindest ihre streuenden Eigenschaften beim Herstellungsprozeß nicht verändern, wird ihre Auswahl erleichtert und sie können entsprechend als Rohmaterial eingekauft werden.

Bevorzugt weisen die Streupartikel einen Durchmesser zwischen 10 nm und 5000 nm auf, besonders bevorzugt zwischen 100 nm und 1200 nm. Für nicht runde Streupartikel wird als Durchmesser im Sinne der Erfindung ihre maximale Ausdehnung verstanden.

Die Streupartikel können aus einer Vielzahl von Materialen ausgewählt sein. Bevorzugt bestehen sie im wesentlichen aus SiO₂ und/oder BaO und/oder MgO und/oder BN und/oder AIN und/oder SN und/oder ZrO₂ und/oder Y₂O₃ und/oder Al₂O₃ und/oder TiO₂ und/oder Ru und/oder Os und/oder Rh und/oder Ir und/oder Ag und/oder Au und/oder Pd und/oder Pt und/oder diamantartiger Kohlenstoff und/oder Glaskeramik-Partikel. Mischungen von Streupartikeln aus verschiedenen Materialien, Verbindungen und/oder Konglomerate aus diesen oder auch miteinander verschmolzene und/oder gesinterte Streupartikel sind ebenfalls denkbar und von der Erfindung umfasst ebenso wie die metallischen Komponenten der vorgenannten Oxide und Nitride alleine.

Werden Streupartikel als Streuzentren verwendet, weist n₃ in etwa den gleichen Wert wie n₁ des Kernglases auf. Ein wesentlich von n₁ abweichender Brechungsindex n₃ des Matrixmaterials, in welches die Streupartikel eingelagert sind, würde dazu führen, dass das Matrixmaterial selbst die Lichtleitung im Kern beeinflussende Effekte bewirken würde. Wäre n₃ beispielsweise wesentlich kleiner als n₁, würde das in dem Kern geführte Licht eher von dem Material der Matrix als durch die Streuzentren reflektiert, so dass nur wenig bis keine Streuung an den Streuzentren erfolgen könnte. Eine solche Faser würde nur wenig Licht zur Seite auskoppeln. Wäre dahingegen der Brechungsindex n₃ des Materials der Matrix wesentlich größer als n₁, würde das in dem Kern geleitete Licht sehr schnell nach außen gelangen und die Faser auf sehr kurzer Länge ihre gesamte Lichtintensität verlieren, so dass nur sehr kurze Faserlängen möglich wären. Ist der Brechungsindex n₃ des Matrixmaterials der Streubereiche in diesem Fall hingegen im wesentlichen gleich dem Brechungsindex n₁ des Kerns, wird das in dem Kern geführte Licht von dem Matrixmaterial höchstens unwesentlich gestört, so dass das in dem Kern geführte Licht von dem Matrixmaterial ungehindert auf die Streupartikel auftreffen kann. Somit ist über die Wahl der Konzentration der Streupartikel im Streubereich eine effiziente Skalierung der seitlichen Emission möglich.

Die Effizienz der Auskopplung aus dem Streubereich und damit aus der Faser ist neben der streuenden Eigenschaft der Streupartikel als intrinsischem Parameter auch von der Konzentration der Streupartikel im Streubereich selbst abhängig.

Eine Ausführungsform der Erfindung sieht daher vor, dass die Streuzentren durch Streupartikel gebildet werden, wobei die Konzentrationen der Streupartikel im Streubereich von 10 ppm bis 1000 ppm und bevorzugt von 20 ppm bis 100 ppm beträgt.

Die Konzentrationsangabe in ppm bezieht sich hierbei auf den Anteil der Streupartikel im Verhältnis zu den Masseanteilen der Bestandteile des Glases, in welchem die Streupartikel eingelagert sind.

Dienen inhomogene Bereiche des Matrixglases der Streubereiche als Streuzentren, ergibt sich eine alternative Ausführungsform der Erfindung, in der die inhomogenen Bereiche durch Phasentrennung und/oder Entmischung der Glaskomponenten des Glases gebildet werden, in welches sie eingelagert sind.

Die durch inhomogene Bereiche gebildeten Streuzentren weisen bevorzugt einen Durchmesser von 10 nm bis 1000 nm auf, besonders bevorzugt von 100 nm bis 800 nm.

Besonders bevorzugt sind diese Streuzentren kugelförmig. Für nicht kugelförmige Streuzentren wird als Durchmesser im Sinne der Erfindung ihre maximale Ausdehnung verstanden.

Das Glas, in dem die inhomogenen Bereiche als Streuzentren eingelagert sind, kann bevorzugt aus einem As- und Pb-haltigen Silikatglas bestehen. Die Streuzentren weisen in diesem Fall bevorzugt einen gegenüber der umgebenden Glasmatrix erhöhten Gehalt an Pb und/oder As auf.

Alternativ kann das Glas, in welches die inhomogenen Bereiche als Streuzentren eingelagert sind, aus einem Fluor-haltigen Ca-Zn-Silikatglas bestehen. Dann weisen die Streuzentren einen gegenüber der umgebenden Glasmatrix bevorzugt einen erhöhten Gehalt an Fluor auf.

Der Brechungsindex n₃ des Glases, in das die Streuzentren eingelagert sind, ist größer als der Brechungsindex n₂ des Mantelglases, d.h. die Bedingung n₃ > n₂ wird erfüllt.

Dabei ist der Brechungsindex n₃ des Glases, in das die Streuzentren eingelagert sind, darüber hinaus mindestens gleich groß oder größer als der Brechungsindex n₁ des Kernglases, d.h. auch noch die Bedingung n₃ ≥ n₁ wird erfüllt.

Wie im Fall der Streupartikel ist die Effizienz der Auskopplung von Licht aus der Faser auch im Fall der inhomogenen Bereiche als Streuzentren neben der streuenden Eigenschaft inhomogenen Bereiche selbst als intrinsischem Parameter auch von der Konzentration der inhomogenen Bereiche in dem sie umgebenden Glas abhängig. Es wurde festgestellt, dass Konzentrationen der inhomogenen Bereiche im Streubereich zwischen 1% und 80% eine effiziente Auskopplung ermöglichen, wobei der bevorzugte Bereich zwischen 10% und 50% liegt. Die Konzentrationsangabe in % bezieht sich hierbei auf den Anteil der inhomogenen Bereiche im Verhältnis zu den Masseanteilen der Bestandteile des Glases, in welchem die inhomogenen Bereiche eingelagert sind.

Insgesamt betrachtet sind die Parameter, mit welchen bevorzugt der Seitenemissionseffekt eingestellt und somit skaliert werden kann, die Anzahl der diskreten Streubereiche entlang der Faserachse, die Streueigenschaften der verwendeten Streuzentren und deren Konzentration sowie die Wahl der Brechungsindices n₁, n₂ und n₃. Durch die geeignete Kombination dieser Parameter wird es möglich, für das menschliche Auge weitgehend homogen erscheinende seitenemittierende Fasern unterschiedlichster Länge herzustellen, so dass eine Vielzahl von Anwendungen überhaupt erst möglich werden.

Neben der Effizienz und Homogenität der Seitenemission müssen die erfindungsgemäßen seitenemittierenden Stufenindexfasern aber auch möglichst gut mechanischen Belastungen widerstehen. Sind die Fasern mechanisch zu empfindlich, treten leicht Faserbrüche auf, welche die Faser unbrauchbar machen können. Insbesondere müssen die erfindungsgemäßen Fasern wiederholt gebogen werden können, ohne dass sie brechen. Ein Kriterium, um die Bruchfestigkeit von Fasern zu beurteilen, ist der sogenannte Schlingentest. Dabei wird aus einer Faser eine Schlinge gebildet, welche zugezogen wird. Je kleiner der Durchmesser der Schlinge ist, bei dem die Faser bricht, desto bruchfester ist sie.

Angemessene Bruchfestigkeiten lassen sich durch vorgespannte Fasern erzeugen. Dies bedeutet für die erfindungsgemäßen Fasern, dass der thermische Ausdehnungskoeffizient des Kernglases bevorzugt größer ist als der thermische Ausdehnungskoeffizient des Mantelglases. Dies bedeutet andersherum, dass das Mantelglas bevorzugt einen kleineren thermischen Ausdehnungskoeffizienten und eine höhere Glasübergangstemperatur T_{g} aufweist als das Kernglas. Durch die relativ zum Kernglas höhere Glasübergangstemperatur des Mantelglases erkaltet beim Ziehen der Faser das Mantelglas schneller als das Kernglas und erzeugt so eine Spannung in der Glasfaser, welche die Glasfaser mechanisch stabilisiert. Solche vorgespannten Fasern sind in der Regel erheblich bruchfester als nicht vorgespannte Fasern. Neben der beschriebenen thermischen Vorspannung sind natürlich auch andere Methoden zum Erzeugen der Spannung möglich. Beispielsweise könnte die Faser während des Herstellungsprozesses oder danach auch chemisch vorgespannt werden. Dabei würden durch bekannte Prozesse zum chemischen Vorspannen bevorzugt Ionen in den Mantel eingebracht, welche für den Aufbau der Spannung verantwortlich wären.

Bei einer bevorzugten erfindungsgemäßen seitenemittierenden Stufenindexfaser beträgt der Durchmesser des Kerns von 10 µm bis 300 µm , der zumindest eine Streubereich weist eine Dicke von 100 nm bis 3 µm auf und der Mantel ist zwischen 500 nm und 15 µm dick. Dies gilt unabhängig davon, ob Streupartikel oder Inhomogenitäten als Streuzentren eingesetzt werden.

Wird die seitenemittierende Stufenindexfaser so ausgezogen, dass ihr Durchmesser in etwa mehr als 0,5 mm beträgt, ist sie nicht flexibel sondern starr. Sie repräsentiert dann einen Lichtleitstab, auch Single Core Rod genannt.

Selbstverständlich werden die erfindungsgemäßen seitenemittierenden Stufenindexfasern in den meisten Fällen nicht als einzelne Fasern eingesetzt, sondern zusammen mit anderen seitenemittierenden Stufenindexfasern oder zusammen mit anderen Lichtleitfasern, welche keinen Seitenemissionseffekt aufweisen, in Faserbündeln, die somit ebenfalls von der Erfindung umfasst sind.

Ein solches Faserbündel ist seinerseits bevorzugt von einem schützenden äußeren Mantel umgeben, der in den meisten Fällen aus Kunststoff besteht. Dieser kann durch bekannte Verfahren um das Faserbündel extrudiert werden. Es ist ebenso möglich, Faserbündel oder Einzelfasern in einen Mantel aus Kunststoff einzuschlauchen. Solche Fasern können auch einzeln, als Bündel und/oder als Bündel mit einem Schutzmantel versehen in einer Art Kabelkanal eingelegt werden, der beispielsweise aus Spritzugußteilen hergestellt sein und aus einem rechteckigen Profil bestehen kann, auf das ein Deckel aufgeklemmt wird. Der Kunststoff ist bevorzugt zumindest in Teilbereichen transparent und/oder transluzent.

Faserbündel haben gegenüber einer Einzelfaser mit gleichem Durchmesser den Vorteil, dass sie viel flexibler sind und in kleineren Biegeradien verlegt werden können. Faserbündel, welche die zuvor beschriebene seitenemittierende Stufenindexfaser beinhalten, sind von der Erfindung ebenfalls umfasst.

Auch das Faserbündel muss im Sinne der Erfindung nicht zwangsläufig flexibel sein, es ist ebenso möglich, dass das Faserbündel als starrer Faserstab ausgeführt ist, der durch späteres Umformen, beispielsweise Biegen und/oder Pressen, in seine endgültige Form gebracht wird. Die Fasern innerhalb des Faserstabs weisen bevorzugt einen Durchmesser von 10 µm bis 300 µm auf. Im Unterschied zu dem zuvor beschriebenen Lichtleitstab enthält ein Faserstab eine Mehrzahl von Einzelfasern und wird daher auch als Multicore Rod bezeichnet. Der Faserstab selbst kann weiterhin bevorzugt von einem Mantelglas und/oder einem Mantel aus Kunststoff umgeben sein, um die Lichtleitfasern und/oder die erfindungsgemäßen seitenemittierenden Stufenindexfasern zu schützen und/oder die Oberflächenqualität des Faserstabes zu erhöhen. Um den Seitenemissionseffekt sichtbar zu machen, ist das Mantelglas und/oder der Kunststoffmantel um den Faserstab bevorzugt zumindest in Teilbereichen transparent und/oder transluzent.

Ein von der Erfindung ebenfalls umfasstes flexibles Faserbündel beinhaltet eine Vielzahl von Glasfasern und einen diese Vielzahl von Glasfasern entlang der Faserbündelachse vollständig umschließenden äußeren Mantel, wobei die Glasfasern eine Vielzahl der zuvor beschriebenen erfindungsgemäßen seitenemittierenden Stufenindexfasern beinhalten und der äußere Mantel zumindest in Teilbereichen entlang der Faserbündelachse transparent und/oder transluzent ist. Die Transparenz und/oder Transluzenz des äußeren Mantels ist deshalb notwendig, damit das von den einzelnen Fasern seitlich emittierte Licht das Faserbündel auch verlassen kann und somit für den Betrachter sichtbar wird. Wird anstelle eines transparenten äußeren Mantels ein transluzenter äußerer Mantel verwendet, ist es möglich, das seitlich emittierende Licht der Einzelfasern zu homogenisieren. Dies gilt natürlich auch für den beschriebenen Lichtleitstab.

Ein erfindungsgemäßes Faserbündel kann typischerweise von 100 bis 10000 Einzelfasern aufweisen, wobei sich die Anzahl nach dem Durchmesser des Faserbündels und nach dem Durchmesser der Einzelfasern richtet, wobei typischerweise ein Füllfaktor von 0,8 bis 0,9 Berücksichtigung findet.

Um höchste Ansprüche bzgl. der Brandsicherheit des Faserbündels sicherzustellen, besteht der äußere Mantel des Faserbündels bevorzugt aus flammfesten Kunststoffen und/oder aus einem Gewebe von Glasfasern. Es ist aber ebenfalls möglich, dass der äußere Mantel durch das Umwickeln der Vielzahl von Glasfasern mit einer oder einer Vielzahl von Glasfasern hergestellt wird. Auch ist es möglich, die einzelnen Fasern des Bündels miteinander zu verspinnen, so dass eine Art Seil und/oder Garn entsteht, das keines separaten Mantels mehr bedarf.

Durch die Erfindung wird es möglich, seitenemittierende Stufenindexfasern mit einer effizienten Seitenemission bereitzustellen, bei denen der Seitenemissionseffekt auch entsprechend den Anforderungen sehr gut skalierbar und damit die Menge des ausgekoppelten Lichts über die Faserlänge gut einstellbar ist.

Dadurch wird es möglich, die erfindungsgemäßen seitenemittierenden Stufenindexfasern auch zusammen mit anderen Lichtleitern und/oder anderen seitenemittierenden Stufenindexfasern und/oder Textilfasern zu einem Flächengebilde zu verbinden. Eine bevorzugte Anwendungsform der Erfindung ist somit ein Flächengebilde beinhaltend eine Mehrzahl von erfindungsgemäßen seitenemittierenden Stufenindexfasern.

Ein Flächengebilde ist im Sinne der Erfindung ein Objekt, welches im Verhältnis zu seiner Dicke eine große Fläche aufweist. Auf diese Weise kann auf der Basis der erfindungsgemäßen seitenemittierenden Stufenindexfasern ein selbst leuchtendes, flächiges Gebilde erzeugt werden, welches Licht homogen über die Fläche verteilt emittieren kann. Ein solches Flächengebilde ist bevorzugt so ausgestaltet, dass ein Betrachter es als homogen leuchtende Fläche wahrnimmt, wenn das Flächengebilde in Betrieb ist, d.h. wenn Licht in die seitenemittierenden Stufenindexfasern des Flächengebildes eingekoppelt wird.

In einer bevorzugten Ausführungsform sind die seitenemittierenden Stufenindexfasern in einem solchen Flächengebilde im wesentlichen parallel zueinander angeordnet sind. Entsprechend der Abstrahlcharakteristik andersartig angeordnete seitenemittierende Stufenindexfasern innerhalb des Flächengebildes sind aber selbstverständlich ebenso möglich.

Bevorzugt ist ein Flächengebilde, bei dem die seitenemittierenden Stufenindexfasern auf einem Trägerelement fixiert sind und so ein Verbundelement aus Trägerelement und seitenemittierenden Stufenindexfasern gebildet wird. Das Trägerelement ist bevorzugt ebenfalls flächig, kann aber beliebige Formen und Wölbungen aufweisen. Das Trägerelement kann dazu beitragen, das Flächengebilde zu stabilisieren.

Alternativ wird ein Flächengebilde bevorzugt, bei dem die seitenemittierenden Stufenindexfasern in das Trägerelement eingebettet sind und so ein Verbundelement aus Trägerelement und seitenemittierenden Stufenindexfasern gebildet wird.

Die Herstellung dieses Verbundelements kann durch einen Spritzgießprozess erfolgen, bei dem bevorzugt transparenter Kunststoff eine Einkapselung der Lichtleitfasern und/oder seitenemittierenden Stufenindexfasern darstellt. Dazu können thermoplastische Kunststoffe, z.B. Polycarbonat, PVC, thermoplastische Elastomere oder Silikone verwendet werden.

Bevorzugt werden die seitenemittierenden Stufenindexfasern auf dem Trägerelement allerdings durch Vernähen und/oder Verweben fixiert. Ebenso ist es möglich, die Stufenindexfasern auch miteinander und/oder mit dem Trägerelement zu vernähen. Als Nähgarn können sowohl textile Garne als auch wiederum Glasfasern verwendet werden.

Bevorzugt kann das Flächengebilde auch durch das Verbinden der erfindungsgemäßen seitenemittierenden Stufenindexfasern mit einem geeigneten Trägerelement erfolgen, beispielsweise durch Verkleben, Laminieren gegebenenfalls zusammen mit einer Folie und/oder andere geeignete Verfahren.

Besonders bevorzugt ist das Trägerelement des erfindungsgemäßen Flächengebildes, auf dem und/oder in dem die seitenemittierenden Stufenindexfasern fixiert sind, transparent und/oder transluzent, damit das Licht durch die Stufenindexfasern emittierbare Licht durch das Trägerelement hindurchtreten kann. Zur Erzielung von Farbeffekten kann das Trägerelement eingefärbt sein.

Zur weiteren Stabilisierung des Flächengebildes ist es in einer weiteren bevorzugten Ausführungsform auch vorgesehen, dass das Verbundelement aus Trägerelement und seitenemittierenden Stufenindexfasern mit einem Stabilisierungselement verbunden ist.

Besonders bevorzugt wird das Stabilisierungselement so angeordnet, dass sich die seitenemittierenden Stufenindexfasern zwischen einer Oberfläche des Trägerelements und einer Oberfläche des Stabilisierungselements befinden. Das Stabilisierungselement kann damit auch zum Schutz der Stufenindexfasern beitragen. Bevorzugt wird es rückseitig als eine Deckschicht in Form einer Folie oder einer starren Platte angeordnet, wobei das Trägerelement bevorzugt transparent und/oder transluzent ist.

Zur Steigerung der Lichtausbeute ist die den seitenemittierenden Stufenindexfasern zugewandte Seite des Trägerelements und/oder des Stabilisierungselements vorzugsweise so ausgebildet, dass sie das von den seitenemittierenden Stufenindexfasern ausgestrahlte Licht reflektieren kann. Dies bedeutet, dass die den Stufenindexfasern zugewandte Seite des Trägerelements oder des Stabilisierungselements weiß eingefärbt sein kann oder spiegelnd ausgebildet ist. Dies lässt sich beispielsweise besonders einfach erreichen, wenn als Stabilisierungselement Aluminiumfolie verwendet wird. Das Trägerelement besteht in diesem Fall bevorzugt aus einem transparenten und/oder transluzenten Kunststoff wie zum Beispiel Plexiglas. Selbstverständlich ist es auch möglich, weitere Stabilisierungselemente mit dem Verbundelement zu verbinden.

Zur Lichteinkopplung können die Lichtleitfasern mittels einer Lichtleiterbündelung zusammengefasst sein, wobei die Lichtleiter mittels Endhülsen und/ oder Klebebändern zusammengefasst, in der Regel verklebt und die Endflächen geschliffen und poliert sind, so dass eine optimale Lichteinkopplung erfolgen kann. Zur Steigerung der Leuchtdichte der Abstrahlfläche können die Lichtleitfasern auch beidseitig zusammengefasst sein, so dass eine beidseitige Lichteinkopplung realisiert werden kann.

Zum Betreiben des erfindungsgemäßen Flächengebildes kann Licht in die Lichtleitfasern und damit die seitenemittierenden Stufenindexfasern eingekoppelt werden. Als Lichtquelle werden bevorzugt punktförmige Lichtquellen verwendet, die zur optimalen Lichtausbeute das Licht mittels einer Vorsatzoptik derart fokussieren, dass das Licht innerhalb des für die Lichtleitfasern spezifischen Akzeptanzwinkels eingestrahlt wird. Aufgrund ihrer kompakten Bauart und vergleichsweise hohen Lichtausbeute werden insbesondere LEDs, besonders bevorzugt Weißlicht-LEDs oder RGB-LEDs zur Lichteinkopplung vorgeschlagen.

Um Licht in das erfindungsgemäße Flächengebilde einleiten zu können, verfügt ein beschriebenes Flächengebilde bevorzugt über Maßnahmen zum Anschließen von zumindest einer LED als Lichtquelle.

Besonders bevorzugt weist ein beschriebenes Flächengebilde Maßnahmen zum Anschließen von zumindest einer LED an gegenüberliegenden Kanten des Flächengebildes vor, so dass das Licht in die Stirnflächen auf beiden Seiten der Stufenindexfasern einkoppeln kann.

Weil die Erzeugung des Streubereichs in der erfindungsgemäßen seitenemittierenden Faser ein schwerwiegendes Problem darstellt, ist ebenfalls die Preform, welche im Herstellungsverfahren eingesetzt wird, ein wesentlicher Teil der Erfindung und von dieser umfasst. Der Begriff "Preform" ist dem Fachmann auf dem Gebiet des Faserzugs wohlbekannt. Er umfasst das Gebilde, aus welchem die Faser gezogen wird. Eine konventionelle Preform, welche zum Herstellen von Glasfasern ohne seitenemittierende Eigenschaften verwendet wird, besteht in der Regel aus einem Kernstab aus Glas, um den Koaxial ein Hüllrohr aus einem Glas angeordnet ist. Der Kernstab kann durch das Giessen des Glases in eine Form erzeugt werden.

Meistens ist eine Nachbearbeitung durch beispielsweise durch Schleifen oder Feuerpolieren notwendig. Das Hüllrohr kann einem Rohrzug entstammen. Verfahren zum Herstellen von Glasrohren sind hinlänglich bekannt. Beim Ausziehen der Preform zur Faser verschmilzt das Hüllrohr mit dem Kernstab, wobei aus dem Kernstab der Faserkern und aus dem Hüllrohr der Mantel gebildet wird. Die Faser weist einen um ein vielfaches kleineren Durchmesser als die Preform auf und aus einer einzigen Preform können auf diese Weise viele Kilometer Faser gezogen werden.

Eine Ausführungsform der Preform zum Herstellen einer seitenemittierenden Stufenindexfaser beinhaltet einen Kernstab aus Glas mit dem Brechungsindex n₁ und ein Hüllrohr aus einem Glas mit dem Brechungsindex n₂, wobei das Hüllrohr den Kernstab entlang der Kernstabachse umschließt und zwischen Kernstab und Hüllrohr im wesentlichen parallel zur Kernstabachse zumindest ein Inlaystab oder aber ein Inlayrohr aus einem Glas angeordnet ist, das im wesentlichen den Brechungsindex n₃ aufweist und in welches Streuzentren eingelagert sind. Dabei unterscheiden sich n₂ und n₃.

Aus den Inlaystäben oder dem Inlayrohr werden während des Faserziehens die Streubereiche gebildet. Die Streuzentren können wie beschrieben durch Streupartikel oder durch inhomogene Bereiche gebildet werden.

Bevorzugt weist eine erfindungsgemäße Preform zwischen Kernstab und Hüllrohr 1 bis 100 Inlaystäbe auf, die im wesentlichen parallel zur Kernstabachse angeordnet sind. Besonders bevorzugt sind 1 bis 50, 1 bis 20, 1 bis 10 und 1 bis 5 Inlaystäbe. Verschmelzen die aus den Inlaystäben entstehenden Streubereiche beim Faserzug nicht miteinander, entspricht die Zahl der Inlaystäbe derjenigen der diskreten Streubereiche auf dem Kern der erfindungsgemäßen seitenemittierenden Stufenindexfaser. Teilverschmelzungen oder vollständige Verschmelzungen sind allerdings wie bereits beschrieben möglich, so dass die Zahl der diskreten Streubereiche nicht zwangsläufig mit der Zahl der Inlaystäbe in der Preform übereinstimmen muss.

Die Inlaystäbe können im wesentlichen mit gleichen Abständen zueinander angeordnet sein. Allerdings ist die genaue Positionierung der Inlaystäbe in der Preform nicht unbedingt wesentlich für das spätere Erscheinungsbild des beschriebenen Faserbündels, da sich durch ungenaue Positionierung ergebene Inhomogenitäten durch die Vielzahl der in dem Faserbündel vorliegenden seitenemittierenden Fasern gegenseitig aufheben.

Bevorzugt werden für die Preform Inlaystäbe verwendet, deren Durchmesser von 0,2 mm bis 2 mm, besonders bevorzugt 0,3 mm beträgt. Dies gilt unabhängig von der Art der in dem Glas der Inlaystäbe eingelagerten Streuzentren.

Der Durchmesser der Streuzentren in einem Inlaystab oder Inlayrohr kann bevorzugt von 10 nm bis 2000 nm betragen, besonders bevorzugt zwischen 100 nm und 1200 nm.

Werden als Streuzentren Streupartikel eingesetzt, welche in das Material des Inlaystabes oder Inlayrohres eingelagert sind, beinhalten diese bevorzugt SiO₂ und/oder SiN und/oder BaO und/oder MgO und/oder ZnO und/oder Al₂O₃ und/oder AIN und/oder TiO₂ und/oder ZrO₂ und/oder Y₂O₃ und/oder die Metalle dieser Oxide alleine und/oder BN und/oder B₂O₃ und/oder Ru und/oder Os und/oder Rh und/oder Ir und/oder Ag und/oder Au und/oder Pd und/oder Pt und/oder diamantartigem Kohlenstoff und/oder Glaskeramik-Partikel.

Die Konzentration der Streupartikel in dem zumindest einen Inlaystab oder Inlayrohr beträgt bevorzugt zwischen 10 ppm und 1000 ppm, besonders bevorzugt zwischen 20 ppm und 100 ppm.

Werden inhomogene Bereiche des Glases der Inlaystäbe oder des Inlayrohres als Streuzentren eingesetzt, beträgt die Konzentration der inhomogenen Bereich in dem zumindest einen Inlaystab oder Inlayrohr bevorzugt zwischen 1% und 80%, besonders bevorzugt zwischen 10% und 50% (in Volumenprozent).

Die inhomogenen Bereiche im Inlaystab oder Inlayrohr sind durch Phasentrennung und/oder Entmischung der Glaskomponenten des Glases gebildet, in welches sie eingelagert sind. Das heißt, es können sich im Glas mit dem Brechungsindex n₃ beispielsweise tröpfchenförmige Entmischungsbezirke mit dem Brechungsindex n₄ bilden, die aus einem Teil der Glaskomponenten des Grundglases mit dem Brechungsindex n₃ gebildet werden.

Diese Entmischungsbezirke mit dem Brechungsindex n₄ haben somit eine andere Zusammensetzung als das Glas mit dem Brechungsindex n₃ und können somit auch andere physikalische Eigenschaften besitzen, beispielsweise eben einen anderen Brechungsindex und/oder einen anderen Ausdehnungskoeffizienten. Bevorzugt besteht das Glas des Inlaystabes oder Inlayrohres, in welches die inhomogenen Bereiche als Streuzentren eingelagert sind, aus einem As-Pb-haltigen Silikatglas. Ein solches Glas ist ein Silikatglas, welches Pb und As beinhaltet. In diesem Fall können die inhomogenen Bereiche gegenüber der umgebenden Glasmatrix des Inlaystabs oder Inlayrohres einen erhöhten Gehalt an Pb und/oder As aufweisen.

Alternativ besteht das Glas des Inlaystabes oder Inlayrohres, in welches die inhomogenen Bereiche Streuzentren eingelagert sind, bevorzugt aus einem Fluor-haltigen Ca-Zn-Silikatglas. Dann können die inhomogenen Bereiche gegenüber der umgebenden Glasmatrix des Inlaystabs oder Inlayrohres einen erhöhten Gehalt an Fluor aufweisen.

Zum Herstellen der erfindungsgemäßen seitenemittierenden Stufenindexfaser wird zunächst zumindest eine zuvor beschriebene Preform als Zwischenprodukt hergestellt. Dazu wird ein Kernstab aus einem Glas mit dem Brechungsindex n₁ bereitgestellt, um den Kernstab herum wird zumindest ein Inlaystab aus einem Glas mit dem Brechungsindex n₃ parallel zu der Kernstabachse angeordnet. In das Glas des Inlaystabes und/oder der Inlaystäbe sind die zuvor beschriebenen Streuzentren eingelagert. Der Brechungsindex n₃ unterscheidet sich von n₂. Um Kernstab und Inlaystäbe herum wird ein Hüllrohr aus einem Glas mit dem Berechungsindex n₂ angeordnet, so dass sich der Kernstab und der Inlaystab und/oder die Inlaystäbe innerhalb des Hüllrohres befinden. Es ist allerdings auch möglich, den oder die Inlaystäbe vor oder nach der Anordnung von Kernstab und Inlaystab in dem Zwischenraum zwischen Kernstab und Hüllrohr anzuordnen. Die so erhaltene Preform wird anschließend in einem Heizaggregat befestigt, in diesem erwärmt und in dem Fachmann bekannter Weise zu einer Glasfaser ausgezogen.

Statt des Inlaystabes und/oder der Inlaystäbe kann genauso mit einem oder mehreren konzentrisch angeordneten Inlayrohr verfahren werden.

Während des Faserzugs verschmelzen der Kern, und der jeweilige Inlaystab oder das jeweilige Inlayrohr an der Grenzfläche zwischen Kern und Inlaystab bzw. Inlayrohr. Der Inlaystab wird dabei auch umgeformt, d.h. falls er in der Preform einen runden Durchmesser aufwies, bildet er nach dem Faserzug bevorzugt einen flachen, leicht gewölbten Bereich auf der Kernumfangsfläche. Sind in diesem Bereich die Streuzentren eingelagert, wird so ein entlang der Faserachse ausgedehnter Streubereich erzeugt. Die Streuzentren werden auf diese Weise sozusagen auf bestimmten Bereichen der Kernumfangsfläche verteilt. Verschmelzen mehrere Inlaystäbe miteinander, ist es möglich, dass der Streubereich den Kern der Faser vollumfänglich, d.h. auf seiner gesamten Umfangsfläche, umschließt.

Die Temperatur, bei welcher der Faserzug erfolgt, wird Ziehtemperatur genannt und liegt oberhalb der Erweichungstemperatur des Glases, aus welchem das Hüllrohr besteht. Üblicherweise werden für den Kern Gläser verwendet, welche eine niedrigere Erweichungstemperatur aufweisen als das Glas des Hüllrohres, damit während der Erwärmung im Heizaggregat auch im Kernstab eine Temperatur erreicht wird, welche oberhalb der Erweichungstemperatur des Glases des Kernstabs liegt. Allerdings sind auch Heizverfahren bekannt, welche es ermöglichen, dass die Erweichungstemperatur des Kernstabs oberhalb der des Hüllrohrs liegen kann. Bevorzugt liegt die Ziehtemperatur auch über der Erweichungstemperatur des höchstschmelzenden Glases, welches in der Preform Verwendung findet. Über das Einstellen der Ziehtemperatur wird die Viskosität des Glases während des Faserzugs so beeinflusst, dass im Zusammenspiel mit der Ziehgeschwindigkeit eine Faser der gewünschten Dicke erhalten werden kann.

Die Inlaystäbe und/oder Inlayrohre, in welche Streupartikel als Streuzentren eingelagert sind, können wie zuvor beschrieben den gleichen Brechungsindex wie der Kernstab aufweisen. Dies ist am einfachsten dadurch zu erreichen, dass das gleiche Glas für Kernstab und Inlaystäbe und/oder Inlayrohre verwendet wird. Abweichungen der Brechungsindices von Kernstab und Inlaystab und/oder Inlayrohr und somit von Faserkern und Matrixglas des Streubereichs, die durch Variationen in der Produktion des Glases auftreten können, sind von der Erfindung selbstverständlich ebenfalls umfasst.

Um die vorgenannten diskreten, sich entlang der Faserachse erstreckenden, aber die Kernumfangsfläche nicht vollständig umschließenden Streubereiche zu erhalten, sieht es das erfindungsgemäße Verfahren vor, dass beim Ausziehen der Preform zumindest ein Inlaystab mit dem Kernstab verschmilzt. Wird mehr als ein Inlaystab verwendet, werden diese so angeordnet, dass sie nicht vollständig miteinander verschmelzen können. Es ist allerdings auch möglich, dass die Inlaystäbe so angeordnet werden, dass manche miteinander verschmelzen, andere hingegen nicht. Auf diese Weise können unterschiedlich breite diskrete Streubereiche entlang der Faserachse erzeugt werden.

Es ist allerdings auch möglich, dass ein Streubereich erzeugt werden soll, der den Kern entlang der Faserachse vollumfänglich umschließt. Der Streubereich belegt dann sozusagen die gesamte Kernumfangsfläche. Dies wird durch das erfindungsgemäße Verfahren dadurch erreicht, wenn eine Mehrzahl von Inlaystäben verwendet und so in der Preform angeordnet wird, dass sie beim Ausziehen der Preform sowohl mit dem Kernstab als auch miteinander verschmelzen. Die Dicke des Streubereichs ist dabei durch Anzahl und Durchmesser der Inlaystäbe einstellbar. Dies ist allerdings auch möglich, wenn ein einzelner Inlaystab ausreichend Volumen aufweist, dass er beim Verschmelzen die Kernumfangsfläche umschließt.

Bevorzugt wird beim Ausziehen der Faser aus der Preform an diese ein Unterdruck angelegt, d.h. in den Zwischenräumen der Preform wird ein Druck erzeugt, der niedriger ist als der Druck des die Preform umgebenden Mediums. Dadurch wird beim Ziehprozeß das Anlegen des Hüllrohrs bzw. des Mantels an den Kernstab bzw. den Faserkern und/oder die Inlaystäbe und/oder Inlayrohre und somit den oder die Streubereiche unterstützt. Dieser Verfahrensaspekt unterstützt beim Faserzug das Anlegen des Mantels an Streubereich und/oder Kern und trägt somit dazu bei, in den ausgezogenen Fasern unerwünschte Zwischenräume zu vermeiden.

In einer bevorzugten Ausgestaltung des erfindungsgemäßen Verfahrens wird für das Hüllrohr ein Glas verwendet wird, dessen thermischer Ausdehnungskoeffizient kleiner ist als der thermische Ausdehnungskoeffizient des verwendeten Kernglases. Das Kernglas ist das Glas, aus welchem der Kernstab und somit der Faserkern bestehen. Wie zuvor beschrieben wird damit erreicht, dass der Mantel eine Spannung auf den Faserkern und/oder den oder die Streubereiche ausübt, so dass die resultierende Faser eine erhöhte Bruchfestigkeit aufweist.

Besonders bevorzugt findet das erfindungsgemäße Verfahren Anwendung in einer Vielfaserziehanlage. In einer Vielfaserziehanlage werden aus einer Mehrzahl von Preformen gleichzeitig eine entsprechende Anzahl von Fasern gezogen. Auf diese Weise lassen sich effizient Faserbündel herstellen. Eine Vielfaserziehanlage ist beispielsweise in den deutschen Patentschriften DE 103 44 205 B4 und DE 103 44 207 B3 ausführlich beschrieben. Im wesentlichen werden dabei mehrere Preformen nebeneinander in einem Heizaggregat einer Vielfaserziehanlage angeordnet und mehrere seitenemitierende Stufenfasern gleichzeitig in einer Vielfaserziehanlage ausgezogen, so dass ein Faserbündel erhalten wird, welches seitenemittierende Stufenindexfasern enthält.

Das so erhaltene Faserbündel kann entweder weiterverarbeitet oder mit weiteren Faserbündeln mit oder ohne seitenemittierende Eigenschaften zu einem größeren Faserbündel weiterverarbeitet werden. Zum Schutz des Faserbündels sieht es eine besonders bevorzugte Ausgestaltung des erfindungsgemäßen Verfahrens vor, dass um das Faserbündel ein äußerer Mantel aus einem zumindest in Teilbereichen transparenten und/oder transluzenten Kunststoff extrudiert wird. Bevorzugt ist der verwendete Kunststoff flammfest.

Alternativ kann das Faserbündel mit Glasfasern umgeben werden, welche einen äußeren nicht-brennbaren zumindest in Teilbereichen transparenten und/oder transluzenten Mantel um das Faserbündel bilden. Dies kann durch das Umschlingen mit anderen Glasfasern oder das Umlegen mit einem Gewebe aus Glasfasern erfolgen.

Bevorzugt wird die erfindungsgemäße seitenemittierenden Stufenindexfaser zusammen mit anderen Lichtleitern und/oder anderen seitenemittierenden Stufenindexfasern in einem Faserbündel verwendet, welches wie zuvor beschrieben von einem äußeren transparenten und/oder transluzenten Mantel umgeben ist.

Um starre Faserbündel zu erzeugen, werden die Preformen nicht wie im Falle der flexiblen Faserbündel zu Fasern mit Durchmessern von typischerweise 50 µm bis 150 µm ausgezogen, sondern zu starren seitenemittierenden Stufenindexfasern von etwa 0,5 mm bis 1 mm Durchmesser. Danach werden etwa 200 bis 10000 dieser starren Einzelfasern in ein Mantelrohr dicht gepackt, dessen Durchmesser von etwa 10 mm bis 60 mm betragen kann, und zu einem starren Faserbündel mit einem Durchmesser von etwa 0,5 mm bis 20 mm ausgezogen. Dieses Faserbündel weist im wesentlichen die gleichen seitenemittierenden Eigenschaften wie ein flexibles Faserbündel auf. Daraus ergeben sich vor allem Einsatzmöglichkeiten bis typischerweise etwa 2 m Länge für exakt gerade Beleuchtungen. Durch thermische Umformung, beispielsweise Biegen und/oder Pressen, können aus den geraden Faserstäben zweidimensionale oder dreidimensionale Objekte hergestellt werden. Diese können alle im folgenden genannten Beleuchtungslösungen sein, aber auch Schriftzüge o.ä.. Auch ist die Herstellung von flachen Faserstäben oder allgemein von unrunden starren Faserstäben oder Platten ist möglich. Sowohl Faserbündel aus starren Einzelfasern als auch aus flexiblen Fasern sind im Sinne der Erfindung von dem Begriff Faserbündel umfasst.

Ein erfindungsgemäßes Faserbündel kann für die akzentuierte Beleuchtung von Innenräumen und/oder Fassaden in der Architektur verwendet werden. Bevorzugt werden dabei die Faserbündel entlang von Konturen von Innenraumbestandteilen, beispielsweise Durchgängen, Trägerelementen, Umrissen von Gebäuden etc. angebracht und an geeignete Lichtquellen angeschlossen. So ist es möglich, die Konturen eines Gebäudes oder Gebäudeteile durch das Faserbündel mit seitenemittierenden Fasern nachzustellen und eine linienförmige Lichtquelle zu realisieren.

Besonders bevorzugt wird das Faserbündel beinhaltend die erfindungsgemäßen seitenemittierenden Stufenindexfasern für die akzentuierte Beleuchtung von Innenräumen von Fahrzeugen, insbesondere von Automobilen, Flugzeugen, Schiffen und/oder Zügen eingesetzt. Dabei kann das Faserbündel an beliebigen Stellen angebracht oder in Konturen dieser Innenräume eingelegt werden. Wird Licht in das Faserbündel eingekoppelt, erscheint dieses bevorzugt als leuchtendes Band oder leuchtende Linie entlang dieser Konturen. Dadurch, dass das Faserbündel so ausgestaltet werden kann, dass es nur flammfeste Stoffe beinhaltet, kann es selbst sehr strenge Brandsicherheitsbestimmungen erfüllen. Das macht es für den Einsatz in Fahrzeugen aller Art besonders geeignet. In Automobilen kann ein bevorzugter Anbringungsort eines erfindungsgemäßen Faserbündels beispielsweise eine Türinnenverkleidung sein, in welcher die Kontur der Vertiefungen der Türöffner, Armauflage, der Übergänge im Verkleidungsmaterial etc. auf diese Weise hervorgehoben werden können. Bei Flugzeugen und Schiffen bietet sich die Anbringung entlang der Fensterbänder, Handgepäckfächer etc. an; ebenso möglich sind Konturbeleuchtungen von Sitzen oder von am Sitz befindlichen Verkleidungen und/oder Tischelementen. In Flugzeugen und Schiffen kann das erfindungsgemäße Faserbündel vorteilhaft zur Markierung von Fluchtwegen eingesetzt werden.

Ebenso bevorzugt ist die Verwendung des erfindungsgemäßen Faserbündels als Teil von Möbeln, insbesondere von Sitzmöbeln, Fahrzeugsitzen, Wohnlandschaften und/oder Küchen. Wird das Faserbündel beispielsweise in die Nähte von Sitzmöbeln wie Sessel, Sofas, Stühle etc. eingearbeitet, können die Konturen dieser Möbel bei Beleuchtung des Faserbündels als leuchtendes Band akzentuiert werden. Bei der Integration in Regale, Schränke lassen sich auf diese Weise ganze Wohnlandschaften mit gezielten Lichteffekten gestalten.

Insbesondere im Automobilbau werden zunehmend auch die Scheinwerfer dazu eingesetzt, durch besondere Beleuchtungseinrichtungen einen Wiedererkennungswert des Herstellers zu erzeugen. Daher weisen manche Automobilscheinwerfer Standlichtringe auf, welche das Abblendlicht umgeben und bei eingeschaltetem Licht als weitgehend homogen leuchtender Ring erscheinen. Andere Hersteller setzen beispielsweise ein Band von LEDs in ihren Scheinwerfern ein. Das erfindungsgemäße Faserbündel wird bevorzugt in Scheinwerfern eingesetzt, insbesondere von Fahrzeugscheinwerfern aller Art, besonders bevorzugt in Scheinwerfern von Automobilen. Das erfindungsgemäße Faserbündel ermöglicht es, beliebige bevorzugt homogen leuchtende Strukturen in Scheinwerfern zu erzeugen. Aus verschiedenen Gründen finden LEDs auch zunehmend Anwendungen in Automobilscheinwerfern. Gegenüber in Bändern angeordneten LEDs hat diese erfindungsgemäße Verwendung den Vorteil, dass wenige LEDs ausreichen, um die Beleuchtung herzustellen. Darüber hinaus sind gegenüber einem Band aus LEDs keine einzelnen Lichtpunkte sichtbar, was auch aus Designgründen bevorzugt werden kann. Auch können ein oder mehrere LEDs in die Stirnfläche des erfindungsgemäßen Faserbündels eingekoppelt werden. Im Sinne der erfindungsgemäßen Verwendung ist die Funktion als Positionslicht innerhalb von Scheinwerfern umfasst, welches wiederum beispielsweise die Anwendungen als Standlicht und/oder als Tagfahrlicht beinhalten.

Eine weitere bevorzugte Verwendung des erfindungsgemäßen Faserbündels ist die Konturbeleuchtung von Fahrzeugen, insbesondere von Automobilen, Flugzeugen, Schiffen und/oder Zügen. Diese Konturbeleuchtung kann gegebenenfalls bei den entsprechenden Fahrzeugen die vorgeschriebenen Positionslichter ersetzen oder ergänzen und so zur Verkehrssicherheit beitragen.

Bevorzugt ist auch die Verwendung des erfindungsgemäßen Faserbündels zur Beleuchtung von Landebahnen für Luftfahrzeuge, beispielsweise Flugzeuge, Hubschrauber, Luftschiffe etc. Bisher werden Landebahnen durch eine Vielzahl von in einer Reihe angeordneten Glühlampen beleuchtet. Diese haben eine begrenzte Lebenszeit, weshalb in einer solchen Reihe immer wieder die ausgefallenen Glühlampen im laufenden Betrieb des Flughafens ersetzt werden müssen. Wird das erfindungsgemäße Faserbündel entlang der Landebahnen und/oder auch in deren Mitte angeordnet, wird eine linienförmige leuchtende Struktur erzeugt, welche die Lage der Landebahn bei Dunkelheit und/oder schlechten Sichtverhältnissen markiert. Die Beleuchtungsquelle kann das Licht in die Faserbündel an wenigen zentralen Stellen einkoppeln, die sich noch nicht einmal in unmittelbarer Nähe der Landebahn befinden müssen. Das erfindungsgemäße Faserbündel ist weitestgehend wartungsfrei, so dass sich die Wartung dieser Landebahnbeleuchtung auf die wenigen eingesetzten Lichtquellen beschränkt. Auf diese Weise können beispielsweise die Start- und Landepisten von Flughäfen markiert werden, aber auch die von Flugzeugträgern, Hubschrauberlandeplätzen und anderen Luftfahrzeugen markiert werden.

Eine bevorzugte Anwendung des beschriebenen und von der Erfindung umfassten Flächengebildes ist die Hintergrundbeleuchtung von Displays. Displays können Anzeigeeinrichtungen aller Art sein, bevorzugt aber Flachbildschirme, beispielsweise Computermonitore, Flachbildfernseher und die Displays von Mobiltelefonen und PDAs (Personal Digital Assistants). Bisher werden großformatige Displays, welche eine Hintergrundbeleuchtung benötigen, von Leuchtstoffröhren beleuchtet, welche am Rand des Displays oder aber hinter der Anzeigefläche des Displays angeordnet sind. Eine möglichst homogene Ausleuchtung der Anzeigefläche wird erwünscht, weshalb sich zwischen Leuchtstoffröhren und Anzeigefläche üblicherweise eine Diffusorplatte befindet, welche das von den Leuchtstoffröhren emittierte Licht homogenisiert. In Diffusorplatten kann das Licht auch seitlich eingekoppelt werden, beispielsweise wenn die Leuchtstoffröhren am Rande des Displays angeordnet sind. Die Diffusorplatte wirkt dann als Lichtleiter. Bei kleineren Displays, beispielsweise Displays von Mobiltelefonen und/oder PDAs, wird üblicherweise Licht von LEDs seitlich in die Diffusorplatte eingekoppelt. Bei größeren Displays findet die LED-Beleuchtung seit neuestem verstärkt Anwendung, weil sie kostengünstiger ist als die Beleuchtung mit Leuchtstoffröhren. Das Problem bei dem Einsatz von LEDs ist, damit eine ausreichend homogen beleuchtete Leichtfläche realisieren zu können. Abhilfe können die erfindungsgemäßen seitenemittierenden Faserbündel schaffen. Werden sie in geeigneten Strukturen hinter der Anzeigefläche verlegt, je nach Bedarf hinter eine Diffusorplatte oder aber auch ohne, können LEDs Licht in die Stirnflächen der Faserbündel einkoppeln, so dass die oder das Faserbündel mit seitenemittierenden Eigenschaften für die Hintergrundbeleuchtung des Displays sorgt. Wird die Anordnung des Faserbündels mit dem Intensitätsverlauf des seitlich emittierten Lichts abgeglichen, lässt sich so kosteneffizient auch eine großflächige homogene Hintergrundbeleuchtung für Displays erzielen.

Alle vorgenannten Anwendungen sind ebenso möglich mit einem solchen Flächengebilde. Insbesondere kann ein solches Flächengebilde auch als Teil der Sitzfläche von Sitzmöbeln ausgeführt werden, aber auch von Bekleidung und allen für Textilien bekannten Anwendungen.

Die Erfindung wird weiterhin anhand der beiliegenden Zeichnungen erläutert. Es stellen dar:
- Fig. 1a:: den Längsschnitt entlang der Faserachse einer nicht seitenemittierenden Stufenindexfaser aus dem Stand der Technik.
- Fig. 1b:: den Querschnitt einer nicht seitenemittierenden Stufenindexfaser aus dem Stand der Technik.
- Fig. 2a:: den Längsschnitt entlang der Faserachse einer erfindungsgemäßen seitenemittierenden Stufenindexfaser mit den Kern vollumfänglich umschließendem Streubereich.
- Fig. 2b:: den Querschnitt einer erfindungsgemäßen seitenemittierenden Stufenindexfaser mit den Kern vollumfänglich umschließendem Streubereich.
- Fig. 3a:: den Längsschnitt entlang der Faserachse einer erfindungsgemäßen seitenemittierenden Stufenindexfaser mit Streubereichen, die den Kern in Teilbereichen entlang der Faserachse vollumfänglich umschließen.
- Fig. 3b:: den Querschnitt einer erfindungsgemäßen seitenemittierenden Stufenindexfaser mit Streubereichen, die den Kern in Teilbereichen entlang der Faserachse vollumfänglich umschließen.
- Fig. 4a:: den Längsschnitt entlang der Faserachse einer erfindungsgemäßen seitenemittierenden Stufenindexfaser mit diskreten Streubereichen, die sich auf einem Teilbereich des Kernumfangs entlang der Faserachse erstrecken.
- Fig. 4b:: den Querschnitt einer erfindungsgemäßen seitenemittierenden Stufenindexfaser mit diskreten Streubereichen, die sich auf einem Teilbereich des Kernumfangs entlang der Faserachse erstrecken.
- Fig. 5a:: den Längsschnitt entlang der Faserachse einer erfindungsgemäßen seitenemittierenden Stufenindexfaser mit diskreten Streubereichen, die sich jeweils auf einem Teilbereich des Kernumfangs auf Teilbereichen entlang der Faserachse erstrecken.
- Fig. 5b:: den Querschnitt einer erfindungsgemäßen seitenemittierenden Stufenindexfaser mit diskreten Streubereichen, die sich jeweils auf einem Teilbereich des Kernumfangs auf Teilbereichen entlang der Faserachse erstrecken.
- Fig. 6a:: eine Preform zum Herstellen einer erfindungsgemäßen seitenemittierenden Stufenindexfaser beinhaltend Inlaystäbe, in welche Streuzentren eingelagert sind.
- Fig. 6b:: ein Faserbündel beinhaltend seitenemittierenden Stufenindexfasern.
- Fig. 6c:: eine Preform zum Herstellen einer erfindungsgemäßen seiten-emittierenden Stufenindexfaser, beinhaltend ein Inlayrohr, in welches Streuzentren eingelagert sind.
- Fig. 7:: das Schema einer Vielfaserziehanlage.
- Fig. 8:: einen Schnitt quer zur Faserachse durch ein Flächengebilde, bei dem die erfindungsgemäßen seitenemittierenden Stufenindexfasern zwischen einem Trägerelement und einem Stabilisierungselement fixiert sind.
- Fig. 9:: einen Schnitt quer zur Faserachse durch ein alternatives Flächengebilde, bei dem die erfindungsgemäßen seitenemittierenden Stufenindexfasern in einem Trägerelement eingelagert sind.
- Fig. 10:: einen Schnitt quer zur Faserachse durch ein Flächengebilde, bei dem die erfindungsgemäßen seitenemittierenden Stufenindexfasern als Faserbündel auf einem Trägerelement fixiert sind und das Gebilde in einem Gehäuse gekapselt ist.
- Fig. 11:: ein Flächengebilde mit Maßnahmen zum Anschließen von Lichtquellen
- Fig. 12:: den schematischen Schnitt durch ein Display beinhaltend ein Flächenelement mit erfindungsgemäßen seitenemittierenden Stufenindexfasern zur Hintergrundbeleuchtung des Displays.
- Fig. 13:: ein Flächengebilde entsprechend Fig. 11, jedoch mit Maßnahmen zum Anschließen von Lichtquellen an beidem Stirnflächen der seitenemittierenden Stufenindexfasern.
- Fig. 14:: einen Flugzeuginnenraum mit Anwendungen von Faserbündeln mit seitenemittierenden Eigenschaften.
- Fig. 15a:: einen Automobilscheinwerfer mit Faserbündeln mit seitenemittierenden Eigenschaften.
- Fig, 15b:: einen weiteren Automobilscheinwerfer mit Faserbündeln mit seitenemittierenden Eigenschaften.
- Fig. 16:: ein Gebäude mit einer akzentuiert leuchtenden Spitze.
- Fig. 17:: die Landebahn eines Flughafens mit leuchtender Landebahnmarkierung.
- Fig. 18:: SEM/EDX-Aufnahmen von kugelförmigen Streupartikeln in einem Pb-haltigen Glas
- Fig. 19:: SEM/EDX-Aufnahmen von kugelförmigen Streupartikeln mit inhomogener Größenverteilung in einem Pb-haltigen Glas
- Fig. 20:: Aufnahme eines Faserbündels beinhaltend seitenemittierende Stufenindexfasern, deren Streuzentren durch eingelagert Pt-Partikel erzeugt werden.
- Fig. 21:: Aufnahme eines Faserbündels beinhaltend seitenemittierende Stufenindexfasern, deren Streuzentren durch Phasentrennung und/oder Entmischung erzeugt werden.
- Fig. 22:: Messkurven der Helligkeitsverteilung erfindungsgemäßer seitenemittierender Stufenindexfasern in Abhängigkeit der Faserlänge.
- Fig. 23:: Messkurven der Helligkeitsverteilung erfindungsgemäßer seitenemittierender Stufenindexfasern in Abhängigkeit der Faserlänge.
- Fig. 24:: den Querschnitt durch einen starren Faserstab beinhaltend die erfindungsgemäßen seitenemittierenden Stufenindexfasern in starrer Form.

Alle Zeichnungen sind schematisch, die Durchmesser ihrer Elemente sind nicht Maßstäblich und auch die Größenverhältnisse aller Elemente untereinander können in den realen Gegenständen von den Zeichnungen abweichen.

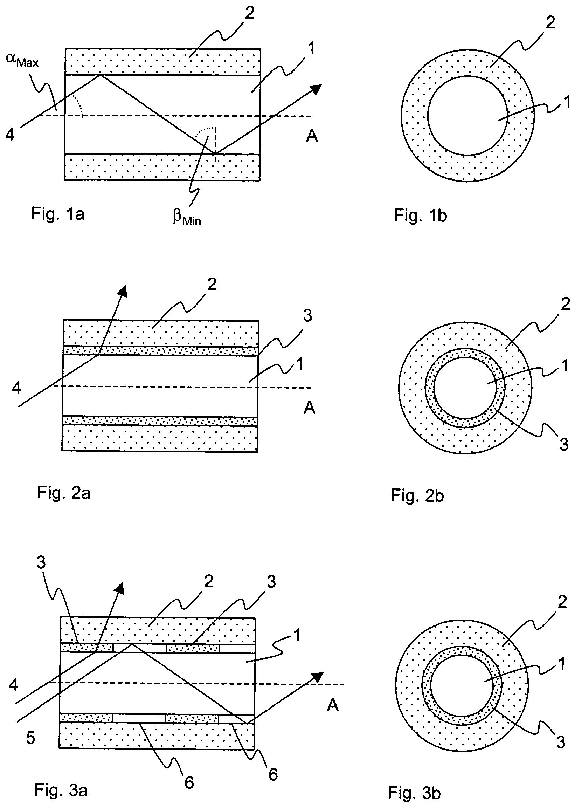

Fig. 1a zeigt den Längsschnitt entlang der Faserachse (A) einer Stufenindexfaser aus dem Stand der Technik. Diese Stufenindexfaser besteht aus einem Kern (1) mit dem Brechungsindex n₁. Dieser ist vollumfänglich von dem Mantel (2) umschlossen, welcher den Brechungsindex n₂ aufweist. Einfallendes Licht (4) wird in dem Kern (1) geleitet, weil aufgrund des kleineren Brechungsindex n₂ Totalreflektion am Mantel (2) auftritt. Allerdings ist die Bedingung der Totalreflektion nur bis zu einem Grenzwinkel des auf den Mantel treffenden Lichts möglich, der von den Werten der Brechungsindices von Kern und Mantel abhängig ist. Der Grenzwinkel β_{Min} kann berechnet werden durch sin(β_{Min}) = n₂ / n₁, wobei β_{Min} von einer Ebene senkrecht zur Faserachse gemessen wird.

Die Brechungsindices des Faserkerns und des ihn umgebenden Mantels sind ebenso für den Akzeptanzwinkel α_{Max} maßgeblich, welcher gemessen von der Faserachse (A) den maximalen Winkel des auf die Endfläche der Faser treffenden Lichts beschreibt, welches in die Faser einkoppeln kann. Als Maß für die Fähigkeit der Faser, schräg einfallendes Licht einzukoppeln, ist die numerische Apperatur N_{A} der Faser gebräuchlich. Sie berechnet sich zu N_{A} = n sin(α_{Max}) = (n₁² - n₂²)^{1/2}, wobei n den Brechungsindex des Mediums repräsentiert, welches das Licht vor dem Einkoppeln in die Faser durchläuft.

Fig. 1b zeigt den Querschnitt der Faser aus Figur 1a, d.h. einen Schnitt quer zur Faserachse (A). Die in Fig. 1a und 1b dargestellten Fasern weisen keine seitenemittierenden Eigenschaften auf, da sie keinen Streubereich enthalten.

Fig. 2a zeigt eine erfindungsgemäße seitenemittierende Stufenindexfaser in ihrem Längsschnitt entlang der Faserachse (A). Diese Faser weist einen Bereich (3) aus einem Glas auf, in welches durch Entmischung und/oder Phasentrennung erzeugte oder Streupartikel als Streuzentren eingelagert sind, der sich zwischen Kern (1) und Mantel (2) der Faser befindet und den Kern (1) vollumfänglich umschließt. In die Faser eingekoppeltes Licht (4) wird durch die Streuzentren in diesem Bereich (3) nach außen, d.h. radial aus der Faser ausgekoppelt, auch wenn der Winkel β_{Min} überschritten wird. Ohne Vorliegen der Streuzentren (3) wäre ansonsten die Bedingung der Totalreflektion erfüllt und die Faser würde das Licht im wesentlichen im Kern (1) leiten. Verantwortlich für die Auskopplung des Lichts (4) ist die Streuung des Lichts (4) an den in dem Bereich (3) eingelagerten Streuzentren. Weil das Material dieses Bereichs (3), in dessen Matrix die Streuzentren eingelagert sind, hier den gleichen Brechungsindex n₁ wie das Material des Kerns (1) aufweist, kann das Licht (4) von dem Matrixmaterial weitgehend ungehindert zu den Streupartikeln gelangen. Durch einzelne oder mehrfache Interaktion mit den Streuzentren kann es durch die Streuzentren von seinem ursprünglichen Einfallswinkel abgelenkt werden, so dass der Auftreffwinkel auf den Mantel (2) so herabgesetzt wird, dass er kleiner als β_{Min} ist und das Licht aus der Faser auskoppeln kann. Ist der Winkel des Einfallens auf den Mantel (2) größer als β_{Min}, erfolgt eine Rückreflektion in den Bereich (3) oder je nach Auftreffen und/oder Interaktion mit den Streuzentren in den Kern (1).

Trifft das Licht (4) auf seinem Weg durch den Bereich (3) zufällig auf keine Streuzentren, trifft es auf den Mantel (2) und verhält sich so, als ob kein Bereich mit eingelagerten Streuzentren vorhanden wäre. Das bedeutet in diesem Fall, dass falls der Winkel des Durchtretens durch den Bereich (3) und damit der Winkel des Auftreffens auf den Mantel (2) größer als β_{Min} ist, das Licht von dem Mantel (2) wieder in den Bereich (3) zurückreflektiert wird. Das rückreflektierte Licht kann wie im Fall zuvor beschrieben seinerseits wieder auf Streuzentren treffen, wodurch sich Strahlengänge ergeben können, die letztendlich zu einer Auskopplung des Lichts aus der Faser oder zu seiner Leitung im Kern (1) führen können.

Dass in diesem Ausführungsbeispiel der Bereich (3) den Kern vollumfänglich umschließt, ist anhand von Fig. 2b gut ersichtlich, welche den Querschnitt der Faser nach Fig. 2a zeigt.

In Fig. 3a ist der Bereich (3) mit den eingelagerten Streuzentren so ausgestaltet, dass sie alternierend Bereiche eingelagerte Streuzentren aufweisen, die sich entlang der Faserachse (A) erstrecken und den Kern (1) entsprechend dem Querschnitt nach Fig. 3b vollumfänglich umschließen und sich mit Bereichen entlang der Faserachse (A) abwechseln, in welche keine Streuzentren eingelagert sind. Trifft das in dem Kern (1) geleitete Licht (4) auf Bereiche mit eingelagerten Streuzentren (3), kann das Licht (4) entsprechend den zuvor beschriebenen Mechanismen mit einer bestimmten Wahrscheinlichkeit radial ausgekoppelt werden. Trifft in dem Kern (1) geleitetes Licht (5) jedoch auf Bereiche ohne eingelagerte Streuzentren, tritt es weitgehend ungehindert durch diese Bereiche, weil sie hier den gleichen Brechungsindex n₁ wie der Kern (1) aufweisen und können durch Totalreflektion am Mantel (2) in der Faser geleitet werden. Durch das gezielte Einstellen des Intervalls zwischen den Streubereichen (3) mit eingelagerten Streuzentren und den Bereichen ohne eingelagerte Streuzentren kann die Menge des ausgekoppelten Lichts eingestellt werden. Wie bereits beschrieben sind allerdings auch andere Parameter für die Effizienz der Auskopplung verantwortlich.

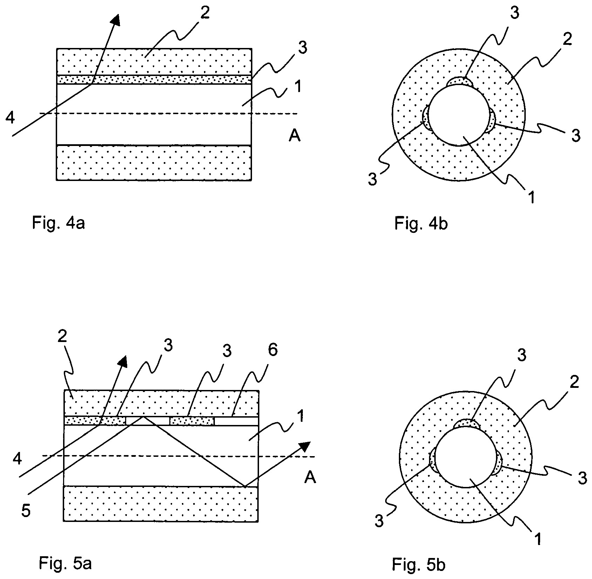

Fig. 4a zeigt den Längsschnitt einer erfindungsgemäßen Stufenindexfaser entlang der Faserachse (A), die diskrete Bereiche (3) aus Glas aufweist, in welches durch Phasentrennung und/oder Entmischung erzeugte Streuzentren eingelagert sind, und die sich entlang der Faserachse (A) aber nur auf Teilbereichen des Kernumfangs erstrecken. Dies wird insbesondere auch anhand des Querschnitts nach Fig. 4b ersichtlich. Anders ausgedrückt sind in diesem Fall nur Teilbereiche der Kernumfangsfläche mit einem Bereich (3) bedeckt, in welchem Streuzentren vorliegen. Daher wird in diesem Fall von diskreten Bereichen gesprochen, die die das Licht auskoppelnde Funktion aufweisen. Wie zuvor beschrieben wurde, werden diese diskreten Bereiche durch das Verschmelzen von Inlaystäben mit einem Kernstab erzeugt, wobei die Inlaystäbe aus einem Glas bestehen, in welchem die Streuzentren eingelagert sind. Hier entstehen die Streuzentren durch Phasentrennung und/oder Entmischung des Glases selbst. Die Verwendung von eingelagerten Streupartikeln ist aber ebenfalls möglich. Die in Fig. 4b dargestellte Form ist rein schematisch zu verstehen. Der diskrete Bereich (3) mit den eingelagerten Streuzentren kann wie auch immer geformt sein. Im wesentlichen bestimmt der Verschmelzungsprozeß die tatsächliche Form dieses diskreten Bereichs (3). Wie anhand von Fig. 2a beschrieben kann Licht (4) durch die diskreten Bereiche (3) mit eingelagerten Streuzentren aus der Faser radial ausgekoppelt werden.

Analog zu dem Ausführungsbeispiel nach Fig. 3a ist es auch bei dem Vorliegen von diskreten Bereichen (3) eingelagerten Streuzentren entsprechend Fig. 4a möglich, dass die diskreten Bereiche (3) nur auf Teilstücken ihrer Ausdehnung entlang der Faserachse (A) mit Streuzentren versehen sind. Ein Längsschnitt entlang der Faserachse (A) einer solchen Faser ist in Fig. 5a dargestellt, ein Querschnitt in Fig. 5b.

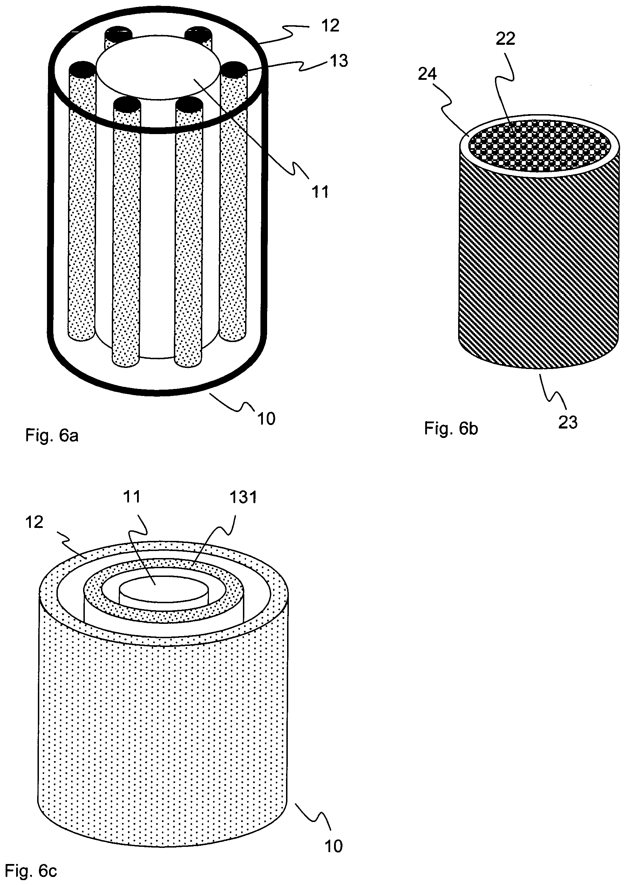

Fig. 6a zeigt eine Preform (10), welche zum Herstellen einer erfindungsgemäßen seitenemittierenden Stufenindexfaser mit den Kern vollumfänglich umschließenden Bereichen mit eingelagerten Streuzentren oder den Kern nur auf Teilbereichen des Kernumfangs umschließenden, sich entlang der Faserachse (A) erstreckenden, diskreten Bereichen mit eingelagerten Streuzentren geeignet ist. Sie ist somit als Vorprodukt der erfindungsgemäßen seitenemittierenden Faser und somit auch für ein erfindungsgemäßes Faserbündel notwendig. Die Preform (10) beinhaltet einen Kernstab (11), um den die Inlaystäbe (13) angeordnet sind. Der Kernstab (11) und die Inlaystäbe (13) sind von einem Hüllrohr (12) umgeben. In den meisten Fällen werden Kernstab (11) und Hüllrohr (12) koaxial zueinander ausgerichtet, d.h. dass die Achse von Kernstab (11) und Hüllrohr (12) im wesentlichen aufeinander liegen, und sich zwischen Kernstab (11) und Hüllrohr (12) zumindest ein Inlaystab (13) befindet. Die Achsen des oder der Inlaystäbe (13) sind im Regelfall parallel zur Achse von Kernstab (11) und Hüllrohr (12) ausgerichtet.

Der Kernstab besteht aus einem Glas mit dem Brechungsindex n₁ und das Hüllrohr aus einem Glas mit dem Brechungsindex n₂. Die Inlaystäbe bestehen aus einem Glas mit dem Brechungsindex n₃, in das die Streuzentren eingelagert sind. Der Brechungsindex n₃ des Glases der Inlaystäbe (13) ist größer als der Brechungsindex n₂ des Mantels. Dabei ist der Brechungsindex n₃ des Glases der Inlaystäbe (13) genauso groß oder größer als der Brechungsindex n₁ des Kerns, weil somit das in dem Kern geführte Licht effizient in den Bereich gelangen kann, in dem die Streuzentren vorliegen und somit eine hohe Effizienz der seitlichen Auskopplung des Lichts aus der Faser erfolgen kann. Erfindungsgemäß sind beide Bedingungen miteinander verknüpft, so dass in diesem Fall gilt n₁ ≤ n₃ > n₂, wobei dann auch n₁ > n₂ gilt.

Um eine unter mechanischer Spannung stehende Faser zu erhalten, wird das Glas des Hüllrohres (12) wie beschrieben bevorzugt so gewählt, dass seine thermische Ausdehnung kleiner als die des Glases des Kernstabes (11) ist.

Beim Ausziehen der Preform (10) wird aus dem Kernstab (11) der Faserkern (1) und aus dem Hüllrohr (12) der Mantel (2). Die Inlaystäbe (13) mit den eingelagerten Streuzentren verschmelzen beim Faserziehen mit dem Kernstab (11) und dem Hüllrohr (12) und werden zu den Bereichen (3), in denen die Streuzentren eingelagert sind. Es ist ebenfalls möglich, dass die Inlaystäbe (13) dabei auch miteinander verschmelzen. Erfolgt eine entsprechend starke Verschmelzung und/oder sind hinreichend viele Inlaystäbe (13) in der Preform (10) enthalten, können die Inlaystäbe (13) während des Faserziehens einen Bereich (3) mit eingelagerten Streuzentren bilden, der den Faserkern (1) entsprechend den Fig. 2a bis 3b vollumfänglich umschließt. Ist die Verschmelzung der Inlaystäbe (13) untereinander unvollständig, entstehen die diskreten Bereich (3) mit eingelagerten Streuzentren entsprechend den Fig. 4a bis 5b.

In Fig. 6b ist ein Faserbündel (23) dargestellt, welches eine Vielzahl von seitenemittierenden Stufenindexfasern (22) enthält. In der vorliegenden Form ist es von einem äußeren Mantel (24) umgeben, welcher das Bündel vor mechanischen Belastungen schützt und welcher wie beschrieben aus Kunststoffen und/oder Glasfasern bestehen kann.

Fig. 6c zeigt eine ebenfalls von der Erfindung umfasste Preform (10) zum Herstellen einer seitenemittierenden Stufenindexfaser, beinhaltend ein Inlayrohr (131) aus einem Glas, in welches Streuzentren eingelagert sind, die hier durch Phasentrennung und/oder Entmischung erzeugt wurden. Die Einlagerung von Streupartikeln als Streuzentren ist ebenfalls möglich. Die Preform (10) beinhaltet ebenfalls einen Kernstab (11), um den das Inlayrohr (131) angeordnet ist. Der Kernstab (11) und das Inlayrohr (131) sind ihrerseits von einem Hüllrohr (12) umgeben. In den meisten Fällen werden Kernstab (11), Inlayrohr (131) und Hüllrohr (12) koaxial zueinander ausgereichtet, d.h. dass die Achse von Kernstab (11), Inlayrohr (131) und Hüllrohr (12) im wesentlichen aufeinander liegen und sich zwischen Kernstab (11) und Hüllrohr (12) das Inlayrohr (131) befindet.

Der Kernstab (11) besteht aus einem Glas mit dem Brechungsindex n₁ und das Hüllrohr (12) aus einem Glas mit dem Brechungsindex n₂. Das Inlayrohr (131) besteht aus einem Glas mit dem Brechungsindex n₃, in das die Streuzentren eingelagert sind. Die Brechungsindices n₁, n₂ und n₃ erfüllen die anhand der Fig. 6a beschriebenen Relationen.

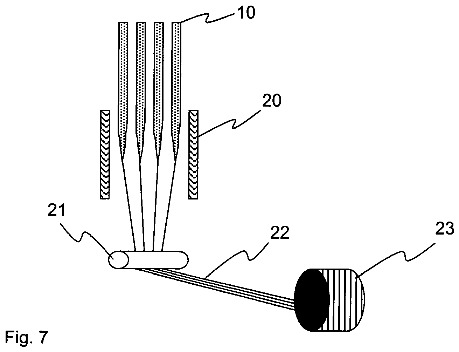

Fig. 7 zeigt das gleichzeitige Faserziehen von Fasern (22) aus mehreren Preformen (10) in einer Vielfaserziehanlage. Die Preformen (10) werden in ein Heizaggregat (20) eingebracht. Zumindest der untere Bereich der Preformen (10) wird Ziehtemperatur gebracht. Üblicherweise beinhaltet das Heizaggregat (20) mehrere Heizbuchsen, wobei jeder Preform (10) eine Heizbuchse zugeordnet ist. In der Heizbuchse sind üblicherweise die Mittel zum Aufheizen der Preform (10) enthalten. Mehrere Fasern (22) werden gemäß der Zeichnung gleichzeitig gezogen, über eine Umlenkrolle (21) umgelenkt und auf einer Aufwickelspule aufgewickelt. Auf der Aufwickelspule befindet sich ein Faserbündel (23), das in diesem Fall nicht von einem äußeren Mantel umgeben ist. Die Anzahl der Fasern in dem Faserbündel entspricht der Anzahl der gleichzeitig gezogenen Fasern (22).

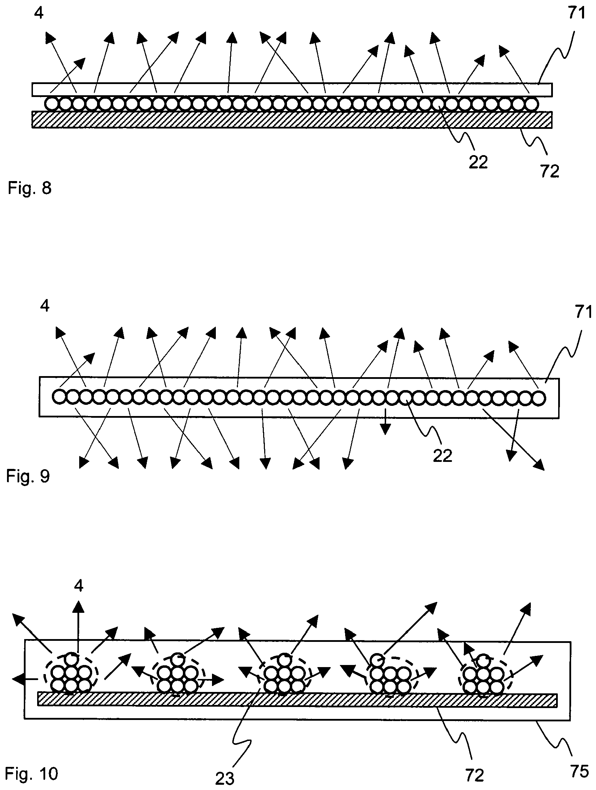

Fig. 8 zeigt den prinzipiellen Aufbau eines Flächengebildes gemäß der Erfindung als Schnitt quer zur Faserbündelachse (A). Die einzelnen seitenemittierenden Stufenindexfasern (22) sind hier als Monolage auf ein transparentes Trägerelement (71) aufgeklebt und somit mit diesem fixiert. Das durch die seitenemittierenden Stufenindexfasern (22) emittierte Licht (4) tritt durch das Trägerelement (71) und wird von dort bevorzugt in alle möglichen Raumrichtungen abgestrahlt. Die den Stufenindexfasern abgewandte Oberfläche des Trägerelements (71) wirkt somit als bevorzugt homogen leuchtende Abstrahlfläche. Rückseitig ist ein Stabilisierungselement (72) mit den seitenemittierenden Stufenindexfasern verbunden, so dass die diese mit dem Trägerelement (71) und dem Stabilisierungselement (72) eine Sandwich-Struktur ausbilden. Als Stabilisierungselement (72) kann beispielsweise eine Aluminiumfolie verwendet werden, deren Fixierung kann auf einfache Weise durch verkleben erfolgen.

In Fig. 9 ist eine Variante dargestellt, bei der die vorwiegend parallel ausgerichteten seitenemittierenden Stufenindexfasern (22) von einem transparenten Kunststoff umspritzt sind, welcher auf diese Weise das Trägerelement (71) bildet. Dies kann abschnittsweise als Spritzgießprozess oder quasi endlos als Extrusionsprozess geschehen. Das von den Stufenindexfasern emittierte Licht (4) kann dabei bevorzugt von beiden Oberflächen des Flächengebildes abstrahlen. Es ist aber ebenso möglich, dass eine Oberfläche des Flächengebildes mit einer reflektierenden Schicht versehen wird, so dass nur die Lichtabstrahlung in eine Richtung erfolgen kann, deren Intensität aber erhöht wird.

In Fig. 10 liegen die seitenemittierenden Stufenindexfasern zumindest als Bestandteil von zueinander beabstandeten Faserbündeln (23) vor, in welchen eine Vielzahl von seitenemittierenden Stufenindexfasern (22) enthalten sind. Dabei sind in diesem Beispiel die Faserbündel (23) auf einem Trägerelement (71) mit einer reflektiven Deckschicht fixiert. Die ganze Anordnung ist bevorzugt eingekapselt. Das von den Faserbündeln (23) emittierte Licht (4) tritt in diesem Fall durch die Verkapselung (75). Diese kann aus einem transparenten Kunststoff bestehen. Andere Materialien sind allerdings ebenso möglich, so dass eine hermetische Verkapselung des Flächengebildes ermöglicht wird. Selbstverständlich ist es auch möglich, dass bei dieser Verkapselungslösung anstatt der Faserbündel (23) auch seitenemittierende Stufenindexfasern (22) auf dem Trägerelement (71) fixiert werden.

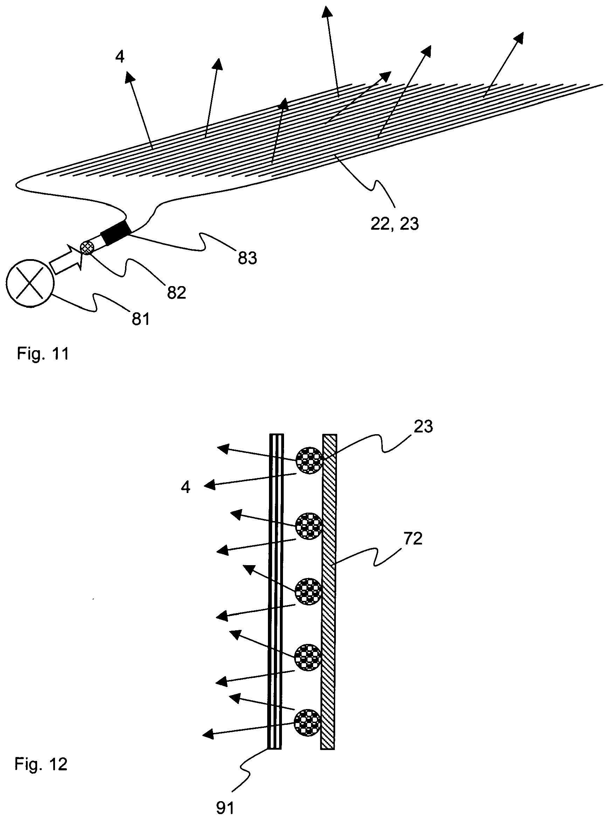

Fig. 11 zeigt ein Flächengebilde, bei dem die seitenemittierenden Stufenindexfasern (22) und/oder Faserbündel (23) beinhaltend die seitenemittierenden Stufenindexfasern vorwiegend parallel angeordnet sind. Dabei können die Stufenindexfasern (22) und/oder die Faserbündel (23) miteinander fixiert sein und/oder mit nicht abgebildeten Trägerelementen (71) und/oder Stabilisierungselementen (72) verbunden sein. Eine Lichtquelle (81) kann in die Stirnfläche der erfindungsgemäßen Stufenindexfasern (22) und/oder die Faserbündel (23) eingekoppelt werden. Dazu sind die Stufenindexfasern (22) und/ oder die Faserbündel (23) mittels der Lichtleiterbündelung (83) zusammengefasst, so dass die flächige Anordnung zu einer Einkoppelfläche (82) umgebildet wird. In der Einkoppelfläche (82) sind die Stirnflächen der Stufenindexfasern (22) bevorzugt möglichst dicht zusammengefasst. Wird Licht von der Lichtquelle (81) über die Einkoppelfläche (82) in die Stufenindexfasern (22) und/oder die Faserbündel (23) und damit in das Flächengebilde eingekoppelt, kann durch die parallel angeordneten Stufenindexfasern (22) und/oder Faserbündel (23) seitlich ausgekoppelt und von der Fläche emittiert werden.

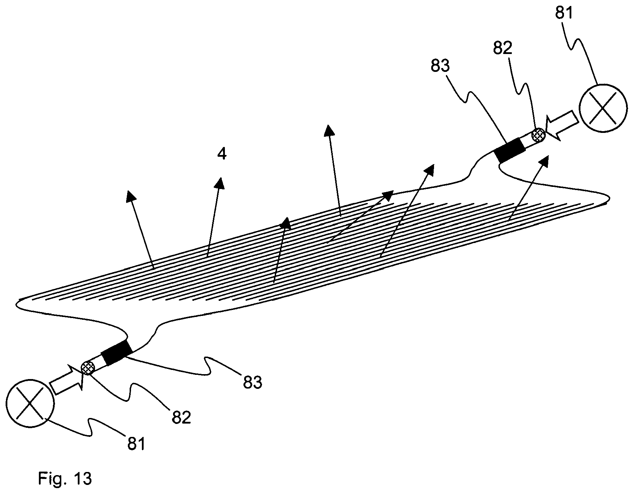

Entsprechend Fig. 13 kann das Flächengebilde auch zwei Einkoppelflächen (81, 82) aufweisen, so dass in das Faserbündel (23) und/oder die seitenemittierenden Stufenindexfasern (22) von beiden Stirnflächen Licht eingekoppelt werden kann. Je nach Art der Anordnung der Faserbündel (23) und/oder der seitenemittierenden Stufenindexfasern (22) ist aber auch eine höhere Anzahl von Einkoppelflächen (81, 82) möglich.

Fig. 12 stellt den schematischen Schnitt durch ein Display beinhaltend ein erfindungsgemäßes Flächenelement zur Hintergrundbeleuchtung des Displays dar. Hierbei wird eine Anzeige-Einheit (91) mittels mehrerer beabstandeter, parallel zueinander angeordneten Lichtleiterbündeln (23) mit jeweils einer Vielzahl von seitenemittierenden Stufenindexfasern (22) hinterleuchtet. Das Faserbündel (23) ist auf einem Trägerelement (72) fixiert, das bevorzugt auf der dem Faserbündel (23) zugewandten Seite verspiegelt ist. Die Anzeige-Einheit (91) kann beispielsweise eine TFT-Einheit mit den beiden Polarisationsplatten und den Flüssigkristallen dazwischen sein. Das von dem Faserbündel (23) emittierte Licht (4) tritt durch die TFT-Einheit hindurch. Besonders bevorzugt werden in diesem Anwendungsbeispiel LEDs als Lichtquelle (81) verwendet.

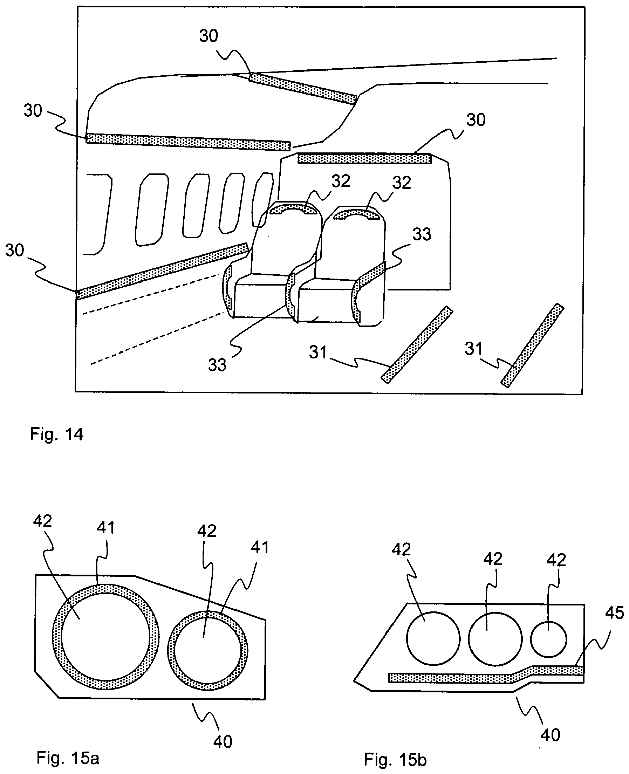

In Fig. 14 ist der Innenraum eines Flugzeuges dargestellt, beispielsweise die Kabine eines Passagierflugzeugs. Faserbündel beinhaltend die erfindungsgemäßen seitenemittierenden Fasern können vielfältige Anwendungen in Flugzeugkabinen finden. Wenn die äußeren Mäntel der Faserbündel aus Materialien gebildet werden, die Flammfest sind, erfüllen die Faserbündel, die ansonsten Glas enthalten, die Zulassungsbestimmungen der für die Zulassung von Passagierflugzeugen zuständigen Behörden und die anwendbaren Herstelleranforderungen. In Fig. 14 sind die seitenemittierenden Faserbündel mitunter als breite Bänder dargestellt. Diese Darstellung muß nicht Maßstabsgerecht sein. Üblicherweise werden die Faserbündel als schmaler Faserstrang verwendet, der als leuchtende Linie erscheint.

Ein solches Leuchtband kann als Konturbeleuchtung (30) entlang der und/oder um die Fenster der Flugzeugkabine, entlang der und/oder um die Fächer der Handgepäckaufbewahrung oder entlang und/oder um Innenraumteiler angebracht sein. Generell ist jede Form von Konturbeleuchtung innerhalb der Flugzeugkabine möglich. In dem Boden der Flugzeugkabine kann das seitenemittierende Faserbündel zur Markierung der Wege (31) innerhalb des Flugzeugs angebracht werden. Besonders vorteilhaft ist diese Wegemarkierung (31) zur Markierung der Wege zu den Notausstiegen. Ebenso ist es möglich, die seitenemittierenden Faserbündel als Konturbeleuchtung für Sitze (33) zu verwenden. Mittels Lichteinkopplung mit farbigen und/oder durchstimmbaren RGB-Lichtquellen können Farbstimmungen, je nach Tageszeit oder Flugdauer erzielt werden. Neben dem dekorativen Effekt haben diese Anwendungen den Vorteil, dass zur Einstellung von Nachtverhältnissen in der Kabine, die für die Passagiere zum Unterstützen von Schlafphasen eingesetzt werden, das Umgebungslicht reduziert werden kann, aber die Passagiere ihre Sitzplätze immer noch auffinden können. Man hat erkannt, dass gerade auf Langstreckenflügen das Einlegen von Schlafphasen die Reise für die Passagiere stressfreier macht. Gleiches gilt für verschieden farbige Lichtstimmungen in unterschiedlichen Flugphasen, in denen Lichtstimmungen beispielsweise in Abhängigkeit von dem Biorythmus der Passagiere eingestellt werden. Daher wird immer mehr Wert auf eine geeignete Nachtausstattung und farbig einstellbare Lichtstimmungen im Innern von Flugzeuginnenkabinen gelegt.

Werden die seitenemittierenden Lichtleitfasern in Form eines Flächengebildes verwendet, beispielsweise indem sie mit Textilfasern verwoben werden, können sie in das Gewebe der Sitzbezüge integriert werden. Dann ist es mit den Fasern nicht nur möglich, Konturbeleuchtungen zu realisieren, sondern auch Flächen wie Teile der Oberfläche der Sitze (32) leuchtend zu gestalten.

Fig. 15a zeigt einen Automobilscheinwerfer (40), in den seitenemittierende Faserbündel Beleuchtungsaufgaben übernehmen. In diesem Beispiel umschließen sie als Ring (41) Abblendlicht (42) und/oder Fernlicht (42). Die seitenemittierenden Faserbündel können so innerhalb des Scheinwerfers (40) als Standlicht und/oder Tagfahrlicht eingesetzt werden.

In Fig. 15b ist ebenfalls ein Automobilscheinwerfer (40) dargestellt, in welchem das seitenemittierende Faserbündel (45) als Strang unterhalb der Hauptscheinwerfer (42) angeordnet ist. Auch in diesem Beispiel kann es neben dekorativen Funktionen die Aufgaben als Stand- und/oder Tagfahrlicht realisieren.

Die Anwendung des erfindungsgemäßen Faserbündels (41, 45) in Automobilscheinwerfern (40) ist vorteilhaft, da das Faserbündel (41, 45) zumindest überwiegend aus Glas besteht und somit Beständig gegenüber Hitze und Verwitterung ist, die durch das Einwirken von aggressiven Substanzen verstärkt werden kann. Das erfindungsgemäße Faserbündel aus Glas ist gegenüber Verwitterung und Hitzebelastung unempfindlicher als seitenemittierende Faserbündel aus Kunststoffen. Außerdem können sehr viel höhere Lichtleistungen in Faserbündel aus Glas eingekoppelt werden, als es in Faserbündel aus Kunststoff möglich ist.

Ebenso eignen sich insbesondere LEDs zur Einkopplung in seitenemittierende Faserbündel besonders gut, da ihre im Vergleich zu Glühlampen oder Gasentladungslampen geringe Abstrahlfläche eine effiziente Einkopplung ohne eine grußvolumige Optik ermöglicht. So lassen sich in einem Automobilscheinwerfer u.a. Kosten, Gewicht und Platz sparen. Gegenüber dem Anbringen von bandförmig angeordneten LEDs hat die Verwendung eines seitenemittierenden Faserbündels (41, 45) in Automobilscheinwerfern (40) den Vorteil, dass das Licht homogen ausgestrahlt wird, so dass nicht der ästhetisch unschöne Eindruck einzelner Leuchtpunkte entsteht, andere Verkehrsteilnehmer nicht durch eine Vielzahl von Leuchtpunkten irritiert werden, der Leuchteffekt weitgehend winkelunabhängig ist und die Anzahl von LEDs verringert wird und dadurch Energie beim Gebrauch des Scheinwerfers eingespart werden kann, was wiederum den Kraftstoffverbrauch des Fahrzeugs und somit seine CO₂-Emissionen senken kann.

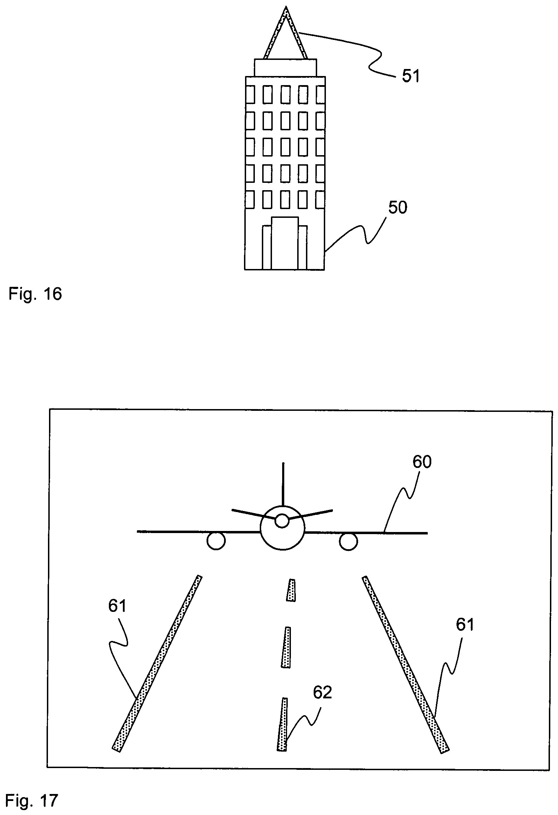

Fig. 16 zeigt die Konturbeleuchtung (51) von Teilen eines Gebäudes (50). Im vorliegenden Beispiel ist das Gebäude ein Hochhaus, wobei die Umrisse der Kuppel für den Betrachter durch die dort angebrachten seitenemittierenden Faserbündel als leuchtend erscheinen.

Anhand Fig. 17 ist die Anwendung der erfindungsgemäßen Faserbündel mit seitenemittierenden Eigenschaften als Markierung von Landebahnen von Luftfahrzeugen (60) dargestellt. Sowohl die seitlichen Markierungen (61) als auch ein Mittelstreifen (62) lassen sich wie zuvor beschrieben vorteilhaft mittels der erfindungsgemäßen seitenemittierenden Stufenindexfasern realisieren.

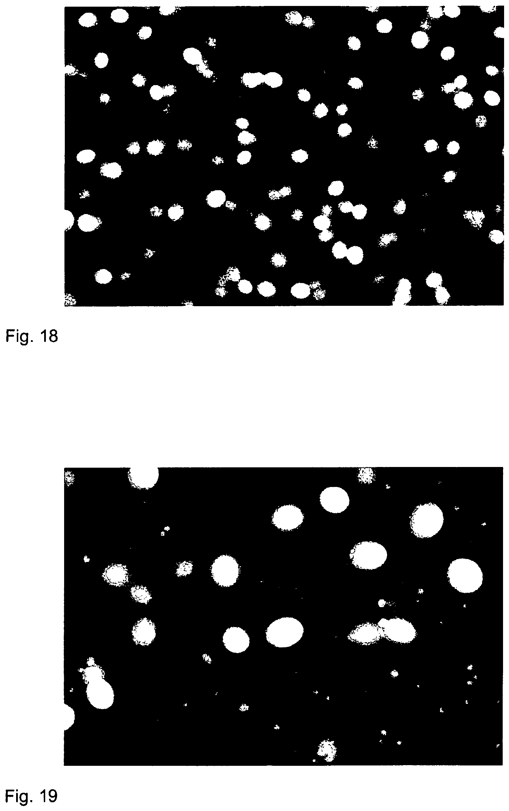

Fig. 18 zeigt eine SEM/EDX-Aufnahme eines Glases, das bevorzugt für Inlaystäbe (13) und/oder Inlayrohre (131) verwendet werden kann. SEM steht wie dem Fachmann allgemein bekannt als Abkürzung von Scanning Electron Microscope, auf deutsch Rasterelektronenmikroskop. Dessen Funktionsprinzip beruht darauf, dann ein dünner Elektronenstrahl über das Objekt gerastert wird. Dabei werden die aus dem Objekt wieder austretende oder rückgestreute Elektronen, oder auch andere Signale, synchron detektiert. Der registrierte Strom bestimmt den Intensitätswert des zugeordneten Bildpunktes. EDX steht für energiedispersives Röntgenanalyse-Verfahren, welches dem Fachmann ebenfalls wohlbekannt ist. Dieses Verfahren ist besonders für chemische Analysen an Oberflächen im µm-Bereich geeignet.

Das gesamte in Fig. 18 gezeigte Bild zeigt einen etwa 7 µm breiten Bereich der Glasprobe. Im vorliegenden Fall wurde ein Na-Al-K-As-Pb-Silikatglas und somit ein Pb-haltiges Glas mit dieser Methode untersucht. Die kreisförmigen hellen Flecken zeigen die in das Glas eingelagerten Streuzentren, welche hier eine annähernd gleiche Größenverteilung aufweisen und in Realität kugelförmig sind. Ihr Durchmesser beträgt etwa 100 nm bis 600 nm. Die Auswertung der EDX-Spektren hat ergeben, dass die kugelförmigen Streuzentren qualitativ die gleiche Zusammensetzung wie das sie umgebende Na-Al-K-As-Pb-Silikatglas haben, aber erheblich höhere Gehalte an As und Pb aufweisen. Daher ist davon auszugehen, dass es sich bei den Streuzentren um Entmischungsprodukte handelt. Diese liegen in dem Glas schon vor dem Faserzug vor, weshalb dieses Glas weißlich opac erscheint.

In Fig. 19 ist ebenfalls eine SEM/EDX-Aufnahme eines anderen Na-Al-K-As-Pb-Silikatglases mit dem gleichen Maßstab wie in Fig. 18 dargestellt. Hier ist auffällig, dass Streuzentren mit zwei verschiedenen Größenklassen vorliegen, die miteinander vermischt sind. Auch hier ist aufgrund der EDX-Spektren davon auszugehen, dass diese Streupartikel einen erhöhten Gehalt an As und Pb aufweisen und als Entmischungsprodukt der sie umgebenden Glasmatrix entstanden sind.

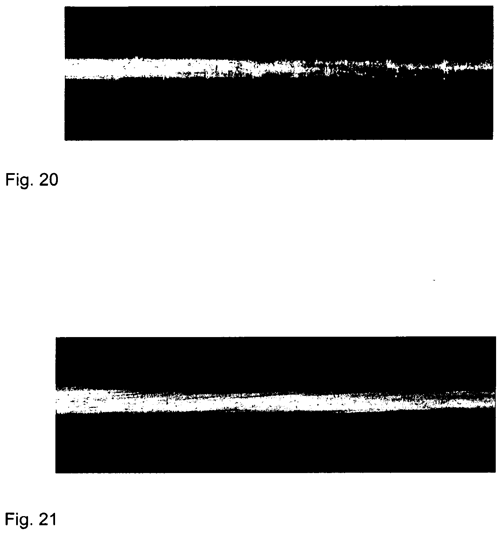

Fig. 20 zeigt eine fotografische Aufnahme eines Faserbündels beinhaltend seitenemittierende Stufenindexfasern, deren Streuzentren durch eingelagert Pt-Partikel als Streuzentren erzeugt werden. Wie anhand der Fig. 20 zu sehen ist zeigt eine solche Faser eine effiziente seitliche Auskopplung mit recht gleichmäßigem Helligkeitsverlauf über die dargestellte Faserbündellänge, aber auch einzelne stark leuchtende Lichtpunkte. Diese stark leuchtenden Lichtpunkte können je nach Anwendung erwünscht oder unerwünscht sein.

In Fig. 21 ist die fotografische Aufnahme eines erfindungsgemäßen Faserbündels (23) beinhaltend erfindungsgemäße seitenemittierende Stufenindexfasern (22) dargestellt, deren Streuzentren wie beschrieben durch Phasentrennung und/oder Entmischung erzeugt wurden. Im Vergleich zu Fig. 20 fällt auf, dass das gezeigte erfindungsgemäße Faserbündel einen sehr gleichmäßigen Helligkeitsverlauf über die Faserbündellänge aufweist und noch dazu sehr homogen leuchtet, d.h. es sind keine einzelnen hell leuchtenden Lichtpunkte zu sehen, so dass das Faserbündel (23) wie ein homogen leuchtender Streifen erscheint.

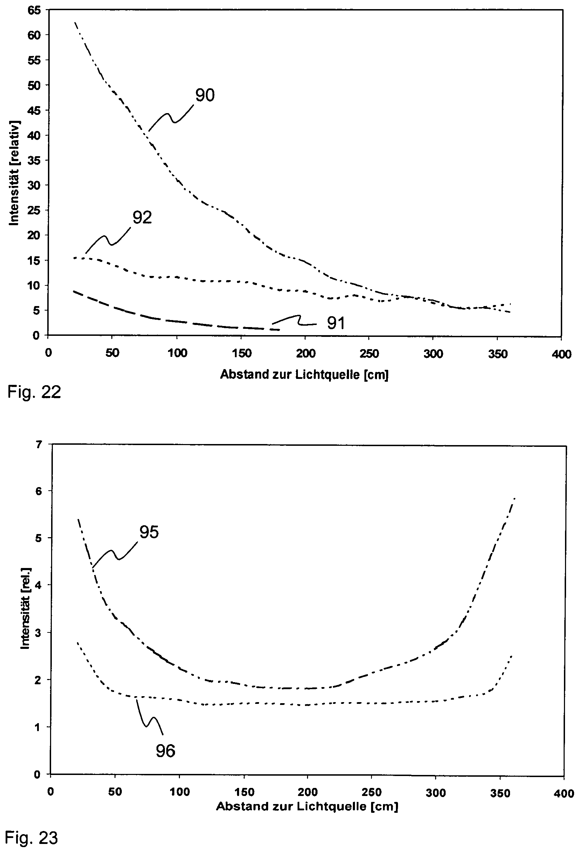

Fig. 22 zeigt die gemessenen Helligkeiten der Seitenemission von erfindungsgemäßen seitenemittierenden Stufenindexfasern (90, 91, 92) gegen den Abstand von der Stirnfläche der Faser aufgetragen. Die Kurve (92) repräsentiert eine erfindungsgemäße seitenemittierende Stufenindexfaser, bei der die Streuzentren durch Zugabe von Pt-Partikeln, aber nicht durch Entmischung und/oder Phasentrennung erzeugt wurden. Die Messung der Helligkeit in Abhängigkeit des Abstands ergibt das Helligkeitsverteilungsprofil der seitenemittierenden Faser. Möglichst große Helligkeiten über einen möglichst großen Abstand sind für die meisten Anwendungen erwünscht. Die Helligkeitswerte in der Fig. 22 sind in willkürlichen Einheiten angegeben. Kurve (90) zeigt das Helligkeitsverteilungsprofil einer erfindungsgemäßen seitenemittierenden Stufenindexfaser, die aus einer Preform mit 3 Inlaystäben mit einem Durchmesser von 300 µm ausgezogen wurden, wobei die Inlaystäbe aus einem Glas bestanden, in das durch Phasentrennung und/oder Entmischung entstandenen inhomogene Bereiche als Streuzentren eingelagert sind. Im Unterschied dazu zeigt Kurve (91) eine erfindungsgemäße seitenemittierenden Stufenindexfaser, bei der die Preform aus den gleichen Inlaystäben wie bei Kurve (90) bestand, aber nur 2 Inlaystäbe verwendet wurden. Wie man erkennen kann, sind die Helligkeiten und somit die Auskoppeleffizienz der seitenemittierenden Stufenindexfasern (90, 91) signifikant unterschiedlich. Eine größere Zahl von Inlaystäben führt zu einer stärkeren Auskopplung, wobei das Helligkeitsprofil im Abstand zur Lichtquelle aber auch im Verhältnis zur Eingangsintensität schneller abnimmt. Durch die Zahl der Inlaystäbe kann die Effizienz der Auskopplung somit auf einfache Weise skaliert werden.

Die seitenemittierende Stufenindexfaser, die für Kurve (92) vermessen wurde, wurde aus einer Preform mit 30 Inlaystäben hergestellt, wobei die Streuzentren in den Inlaystäben durch Pt-Partikel mit einer Durchmesser-Größenverteilung von 150 nm bis 450 nm repräsentiert werden. Der Vergleich der Kurven (90) und (91) mit Streuzentren, die durch Phasentrennung und/oder Entmischung entstanden sind, zu Kurve (92) mit Streuzentren, die durch Pt-Partikel repräsentiert werden, zeigt, dass mit Hilfe der Kurven (90) und (91) zugrundegelegten Inlaystäbe mit weniger Material und erheblich weniger Kosten eine im Fall der Kurve (90) eine höhere Auskoppeleffizienz erzielt werden kann, als durch die Inlaystäbe, welche der Kurve (92) zugrunde liegen. Allerdings ist die relative Abnahme der Intensität bei Kurve (92) deutlich geringer als bei den Kurven (90) und (91).

Somit ist ersichtlich, dass sowohl durch die Wahl der Anzahl der Inlaystäbe und somit über die Menge von Streuzentren in der Faser als auch über die Wahl der Streuzentren selbst die Effizienz der Auskopplung entsprechend der jeweiligen Anforderung eingestellt werden kann. Insbesondere ist es auch möglich, in einer Preform verschiedene Inlaystäbe mit verschiedenen Streuzentren zu mischen als auch Inlaystäbe zu verwenden, die beispielsweise Streuzentren aus Pt-Partikeln und Streuzentren enthalten, die durch Phasentrennung und/oder Entmischung gebildet werden.

In Fig. 23 ist wiederum wie bei Fig. 22 die gemessenen Helligkeiten der Seitenemission einer erfindungsgemäßen seitenemittierenden Stufenindexfaser (95) gegen die den Abstand von der Stirnfläche der Faser aufgetragen, allerdings im Unterschied zu Fig. 22 mit beidseitiger Einkopplung. Die Helligkeitswerte in der Fig. 23 sind ebenfalls in willkürlichen Einheiten angegeben. Die Kurve (95) repräsentiert die gleiche seitenemittierende Stufenindexfaser wie die bzgl. Kurve (90) beschriebene, Kurve (96) eine seitenemittierende Stufenindexfaser wie die bzgl. Kurve (92) beschriebene. Wie im Vergleich der Fig. 22 und 23 leicht zu erkennen ist, erhöht eine beidseitige Einkopplung die Intensität gerade im Mittelteil der Faser, weshalb eine beidseitige Einkopplung bei vielen Anwendungen bevorzugt wird.

Kurve (95) zeigt durchweg höhere Intensitäten als Kurve (96), allerdings ist der Helligkeitsabfall bei Kurve (96) stärker ausgeprägt. Auch bei beidseitiger Einkopplung sind die zuvor beschriebenen Möglichkeiten zur Skalierung des Seitenemissionseffekts selbstverständlich möglich.

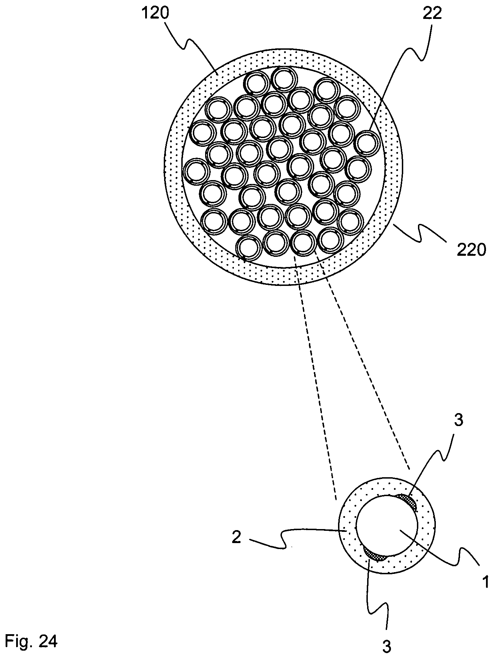

Fig. 24 zeigt den Querschnitt durch einen starren Faserstab (220) beinhaltend eine Mehrzahl von erfindungsgemäßen seitenemittierenden Stufenindexfasern (22) in starrer Form sowie vergrößert den schematischen Querschnitt durch eine erfindungsgemäße starre seitenemittierende Stufenindexfaser. Der Faserstab (220) ist von einem Mantel (120) aus Glas umgeben, in dessen Innern sich die seitenemittierenden Stufenindexfasern (22) befinden. Der Mantel (120) kann alternativ auch aus Kunststoffen gefertigt sein. Er ist wie bereits beschrieben bevorzugt zumindest in Teilbereichen transparent und/oder transluzent, damit in diesen Bereichen seitlich Licht aus dem Faserstab (220) auskoppeln und von einem Beobachter wahrgenommen werden kann. Die einzelnen seitenemittierenden Stufenindexfasern (22) können an ihren Kontaktflächen miteinander verschmolzen sein. Gleiches gilt für die Kontaktflächen der einzelnen seitenemittierenden Stufenindexfasern (22) mit dem Mantel (120). Der Mantel (120) dient hauptsächlich dazu, die seitenemittierenden Stufenindexfasern (22) zusammenzuhalten und/oder vor äußeren Einwirkungen zu schützen. Insbesondere kann durch den Mantel (120) verhindert werden, dass Partikel oder andere Substanzen in die Zwischenräume zwischen den einzelnen seitenemittierenden Stufenindexfasern (22) eindringen können. Darüber hinaus weist der Faserstab (220) dank des Mantels (120) eine im wesentlichen glatte Oberfläche auf, was für manche Anforderungen vorteilhaft ist.

Vergrößert dargestellt ist in Fig. 24 ferner der schematische Querschnitt durch eine einzelne seitenemittierende Stufenindexfaser (22). Dieser entspricht im wesentlichen dem in Fig. 4b dargestellten Querschnitt. Die seitenemittierende Stufenindexfaser (22) besteht aus dem Kern (1), der von dem Mantel (2) umgeben ist. Zwischen beiden befinden sich in der Zeichnung zwei Streubereiche (3). Diese sind in der Zeichnung punktförmig dargestellt, sollen aber symbolisieren, dass sie mittels zweier Inlaystäbe (13) erzeugt wurden, die mit dem Kern (1) verschmolzen sind. Es ist ebenfalls möglich, dass die Streubereiche (3) auch miteinander verschmolzen sind, so dass sie den Kern (1) entlang der Kernumfangsfläche umschließen.

Zum Erzeugen einer bevorzugten Ausführungsform der erfindungsgemäßen seitenemittierenden Stufenindexfaser wurde ein Kernstab (11) mit feuerpolierter Oberfläche zusammen mit Inlaystäben (13) und einem Hüllrohr gemäß dem beschriebenen Verfahren zu einer Faser ausgezogen. Der Kernstab wies einen Durchmesser von 30 mm auf. Das Hüllrohr (12) hatte einen Außendurchmesser von 35 mm und einen Innendurchmesser von 33,5 mm. In das an einem Ende zugeschmolzene Hüllrohr (12) wurde der Kernstab (11) eingesteckt und in den dazwischenliegenden Spalt wurden 1 bis 100 Inlaystäbe (13) aus einem Glas mit der gleichen Zusammensetzung wie der Kernstab (11) angeordnet, welchem in der Schmelze jedoch nanofeine Zirkonpartikel oder nanofeine Edelmetallpartikel im Konzentrationsbereich von 1 ppm bis 100 ppm zugesetzt wurden. Der Durchmesser der Inlaystäbe betrug zwischen 0,1 mm und 2 mm. Das geschlossene Ende der so entstandenen Preform (10) wurde unter Anlegen eines Unterdrucks am offenen Ende der Preform zwischen Kernstab (11) und Hüllrohr (12) in das Heizaggregat (20) einer bekannten Ziehanlage eingefahren und bis zur Ziehtemperatur erhitzt. Die Ziehtemperatur betrug typischerweise zwischen 800 °C und 1100 °C. Nach Erweichen des Endes der Preform (10) wurde dieses nach unten aus dem Heizaggregat (20) gezogen und somit zu einer Faser verjüngt. Durch diesen Prozeß wurden die Inlaystäbe (13) so stark erweicht, dass sie sich verformten und schließlich einen Streubereich (3) zwischen Kern (1) und Mantel (2) der Faser (22) bildeten. Durch Nachführen der Preform (10) in dem Heizaggregat (20) war ein kontinuierlicher Faserziehprozeß möglich, dessen Ergebnis eine seitenemittierende Stufenindexfaser mit einem Durchmesser von 5 µm bis 300 µm und einer Länge von mehreren Kilometern war.

Zum Erzeugen einer anderen bevorzugten Ausführungsform der erfindungsgemäßen seitenemittierenden Stufenindexfaser wurde ein Kernstab (11) mit feuerpolierter Oberfläche zusammen mit Inlaystäben (13) und einem Hüllrohr gemäß dem beschriebenen Verfahren zu einer Faser ausgezogen. Der Kernstab wies einen Durchmesser von 30 mm auf. Das Hüllrohr (12) hatte einen Außendurchmesser von 35 mm und einen Innendurchmesser von 33,5 mm. In das an einem Ende zugeschmolzene Hüllrohr (12) wurde der Kernstab (11) eingesteckt und in den dazwischenliegenden Spalt wurden 1 bis 30 Inlaystäbe (13) aus einem As-Pb-haltigen Silikatglas angeordnet, in das Streuzentren eingelgagert sind, die einen erhöhten Gehalt an Pb enthielten und die durch Phasentrennung und/oder Entmischung erzeugt wurden. Ein solches Glas kann als Farbglas kommerziell von verschiedenen Herstellern bezogen werden. Der erhältliche Glasstab mit einem Durchmesser von einigen Millimetern wurde für die Herstellung zu einer typischen Dicke von zwischen etwa 100 µm und 1 mm wie zuvor beschrieben ausgezogen.

Zur Herstellung eines zuvor beschriebenen Lichtleitstabes, der im wesentlichen aus einer starren seitenemittierenden Stufenindexfaser umgeben von einem Hüllglas besteht, wurde eine Preform (10) mit 1 bis 20 Inlaystäben (13) aus einem Farbglas und einem Durchmesser von 0,1 mm bis 0,5 mm bis zu einer Dicke von 1 mm bis 20 mm und bevorzugt von 3 mm bis 10 mm ausgezogen. Die in dem Farbglas eingelagerten Streuzentren werden durch Inhomogenitäten des Farbglases erzeugt und sind in dem Farbglas von Anfang an enthalten. Die auf diese Weise erhaltene seitenemittierenden Stufenindexfaser ist aufgrund dieser Durchmesser starr.

Bei dem beschriebenen Lichtleitstab können die Inlaystäbe (13) rundum verteilt angeordnet sein oder auf einer Seite konzentriert angeordnet sein, womit der Effekt der seitlichen Lichtabstrahlung in seiner Abstrahlcharakteristik gerichtet werden kann.

Die in dem Farbglas eingelagerten Streuzentren werden durch Inhomogenitäten des Farbglases erzeugt und sind in dem Farbglas von Anfang an enthalten. Die auf diese Weise erhaltene seitenemittierenden Stufenindexfaser ist aufgrund dieser Durchmesser starr.

Zur Herstellung eines beschriebenen starren Faserstabes (220) beinhaltend eine Mehrzahl von starren seitenemittierenden Stufenindexfasern (22) wurde eine Preform bestehend aus typischerweise 500 bis 2000, bevorzugt von 800 bis 1200 einzelnen starren seitenemittierenden Stufenindexfasern (22) mit einem Durchmesser von 0,5 mm bis 1 mm und einem Hüllrohr bis zu einer Dicke von 1 mm bis 20 mm und bevorzugt von 3 mm bis 10 mm ausgezogen. Die einzelnen starren seitenemittierenden Stufenindexfasern (22) wurden wie zuvor beschrieben durch das Ausziehen aus Preformen (10) aus Kernstäben (11), Inlaystäben (13) und Hüllrohr (12) erzeugt. Bei der Herstellung eines starren Faserstabes (220) handelt es sich also sozusagen um einen Wiederziehprozeß von zuvor erzeugten seitenemittierenden Stufenindexfasern (22).

Sowohl der beschriebene Lichtleitstab als auch der beschriebene Faserstab (220) können in weiteren Prozessschritten mittels Heißformgebungsprozessen 2D als auch 3D gebogen und/ oder gepresst werden, um die beispielsweise ihre Querschnittsgeometrie zu ändern und/oder ihre Form den Erfordernissen anzupassen.

Vorteilhaft können als Materialien für den Kernstab (11) und somit für den Kern (1) Gläser mit den im Folgenden genannten Zusammensetzungen eingesetzt werden.

Kernglas Variante 1 mit Brechungsindex n₁ von 1,65 bis 1,75, beinhaltend (in Mol% auf Oxidbasis)

| | | | |
|---|---|---|---|
| SiO₂ | 25 bis 45 | Ta₂O₅ | 0,1 bis 6 |
| B₂O₃ | 13 bis 25 | ZrO₂ | 0,1 bis 8 |
| CaO | 0 bis 16 | ZnO | 0,1 bis 8 |
| SrO | 0 bis 8 | CaO + SrO+ BaO + ZnO > 33 | |
| BaO | 17 bis 35 | Al₂O₃ | 0 bis 5 |
| La₂O₃ | 2 bis 12 | | |

Kernglas Variante 2 mit Brechungsindex n₁ von 1,65 bis 1,75, beinhaltend (in Mol% auf Oxidbasis)

| | |
|---|---|
| SiO₂ | 54,5 bis 65 |
| ZnO | 18,5 bis 30 |
| Summe der Alkalioxide | 8 bis 20 |
| La₂O₃ | 0 bis 3 |
| ZrO₂ | 2 bis 5 |
| HfO₂ | 0,02 bis 5 |
| ZrO₂ + HfO₂ | 2,02 bis 5 |
| BaO | 0,4 bis 6 |
| SrO | 0 bis 6 |
| MgO | 0 bis 2 |

CaO 0 bis 2
Summe der Erdalkalioxide 0,4 bis 6
Li₂O 0,5 bis 3, jedoch nicht mehr als 25 Mol% der Summe der Alkalioxide
SiO + ZrO₂ + HfO₂ > 58,5
Verhältnis ZnO : Summe der Erdalkalioxide > 3,5 : 1

Kernglas Variante 3 mit Brechungsindex n₁ von 1,58 bis 1,65, beinhaltend (in Mol% auf Oxidbasis)

| | | | |
|---|---|---|---|
| SiO₂ | 50 bis 60 | Nb₂O₅ | 0 bis 4 |
| B₂O₃ | 0 bis 15 | La₂O₃ + Y₂O₃ + Nb₂O₅ | 0 bis 4 |
| BaO | 10 bis 35 | Na₂O | 4,5 bis 10 |
| SrO | 0 bis 18 | K₂O | 0,1 bis 1 |
| Sr + Ba | 10 bis 35 | Rb₂O | 0 bis 1,5 |
| ZnO | 0 bis 15 | Cs₂O | 0 bis 1,5 |
| Sr + Ba + Zn | 10 bis 40 | Rb₂O + Cs₂O | 0 bis 1,5 |
| B₂O₃ + ZnO | 5 bis 35 | Summe der Erdalkalioxide 4,8 - 11 | |
| Al₂O₃ | 0,1 bis 1,9 | MgO | 0 bis 6 |
| ZrO₂ | 0 bis 4 | CaO | 0 bis < 5 |
| La₂O₃ | 0 bis 4 | | |
| Y₂O₃ | 0 bis 4 | | |

Kernglas Variante 4 mit Brechungsindex beinhaltend (in Gew.% auf Oxidbasis)

| | |
|---|---|
| SiO₂ | 42 bis 53 |
| ZnO | 30 bis 38 |
| Na₂O | < 14 |
| K₂O | < 12 |
| Na₂O+K₂O | ≥ 2 |
| BaO | < 0,9 |

Kernglas Variante 5 mit Brechungsindex beinhaltend (in Gew.% auf Oxidbasis)

| | |
|---|---|
| SiO₂ | 30 bis 45 |
| B₂O₃ | < 12 |
| ZnO | < 10 |
| BaO | 25 bis 40 |
| Na₂O | < 10 |
| K₂O | < 2 |
| Al₂O₃ | < 1 |
| La₂O₃ | < 10 |

Mantelglas Variante 1 (in Gew.% auf Oxidbasis), beinhaltend

| | |
|---|---|
| SiO₂ 70 bis 78 | MgO 0 bis 1 |
| Al₂O₃ 0 bis 10 | CaO 0 bis 2 |
| B₂O₃ 5 bis 14 | SrO 0 bis 1 |
| Na₂O 0 bis 10 | BaO 0 bis 1 |
| K₂O 0 bis 10 | F 0 bis 1 |

und im wesentlichen kein Li₂O.

Mantelglas Variante 2 (in Gew.% auf Oxidbasis), beinhaltend

| | |
|---|---|
| SiO₂ 63 bis 75 | MgO 0 bis 5 |
| Al₂O₃ 1 bis 7 | CaO 1 bis 9 |
| B₂O₃ 0 bis 3 | BaO 0 bis 5 |
| Na₂O 8 bis 20 | F 0 bis 1 |
| K₂O 0 bis 6 | |

und im wesentlichen kein Li₂O.

Mantelglas Variante 3 (in Gew.% auf Oxidbasis), beinhaltend
SiO₂ 75 bis 85
Al₂O₃ 1 bis 5
B₂O₃ 10 bis 14
Na₂O 2 bis 8
K₂O 0 bis 1
und im wesentlichen kein Li₂O und MgO.

Mantelglas Variante 4 (in Gew.% auf Oxidbasis), beinhaltend

| | |
|---|---|
| SiO₂ | 62 bis 70 |
| B₂O₃ | >15 |
| Li₂O | >0.1 |
| Na₂O | 0 bis 10 |
| K₂O | 0 bis 10 |
| MgO | 0 bis 5 |
| CaO | 0 bis 5 |
| SrO | 0 bis 5 |
| BaO | 0 bis 5 |
| ZnO | 0 bis 5 |
| F | 0 bis 1 |

Mantelglas Variante 5 (in Gew.% auf Oxidbasis), beinhaltend

| | |
|---|---|
| SiO₂ | 60 bis 72 |
| B₂O₃ | < 20 |
| Al₂O₃ | <10 |
| Na₂O | < 18 |
| K₂O | < 15 |
| Li₂O | < 5 |
| F | ≤ 1 |

Mantelglas Variante 6 (in Gew.% auf Oxidbasis), beinhaltend

| | |
|---|---|
| SiO₂ | 72-78 |
| B₂O₃ | 5 bis 15 |
| Al₂O₃ | 5 bis 10 |
| Na₂O | < 10 |
| K₂O | < 10 |
| Li₂O | < 5 |
| F | ≤ 1 |

Mantelglas Variante 7 (in Gew.% auf Oxidbasis), beinhaltend

| | |
|---|---|
| SiO₂ | 70-80 |
| B₂O₃ | < 5 |
| Al₂O₃ | < 10 |
| La₂O₃ | < 2 |
| Na₂O | < 10 |
| K₂O | < 10 |
| ZrO₂ | < 2 |

Wie beschrieben können alle für die Kerngläser verwendeten Gläser im Sinne der Erfindung auch für das Glas der Inlaystäbe (13) verwendet werden und somit als Matrixglas für die Herstellung des Streubereichs (3) dienen, indem in das Glas Streupartikel eingelagert werden, insbesondere wenn Streupartikel als Streuzentren eingesetzt werden.

Die auf diese Weise erhaltenen Glasfasern weisen eine hervorragende Bruchfestigkeit auf. Durchgeführte Schlingentests ergaben für seitenemittierende Stufenfasern, welche aus den vorgenannten Gläsern bei einer Ziehtemperatur von 1040 °C gezogen wurden, folgende Werte im Schlingentest:

| | N_{I} = 15 | N_{I} = 15 | N_{I} = 30 | N_{I} = 30 |
|---|---|---|---|---|
| | FF = 150-450 | FF = 500-1200 | FF = 150-450 | FF = 500-1200 |
| d_{Min} [mm] | 1 | 1 | 1 | 1 |
| d_{Max} [mm] | 4 | 3 | 2 | 4 |
| d_{Bruch} [mm] | 1,84 | 1,36 | 1,88 | 1,64 |

Die Streupartikel bestanden dabei hauptsächlich aus Pt. N_{I} bezeichnet die Anzahl der verwendeten Inlaystäbe in der Preform, FF den Formfaktor, gleichbedeutend den Durchmesser der Streupartikel. FF = 150-450 symbolisiert demnach das Vorliegen von Streupartikeln in einer Korngrößenverteilung mit den Durchmessern 150 nm bis 450 nm. FF = 500-1200 dementsprechend Streupartikel in einer Korngrößenverteilung mit den Durchmessern 500 nm bis 1200 nm. Für jede Kombination aus N_{I} und FF wurden je 25 Schlingetests durchgeführt. d_{Min} gibt den kleinsten Durchmesser der Schlinge in mm an, bei welchem die Faser bricht, d_{Max} den größten Durchmesser der Schlinge in mm, bei welcher ein Faserbruch zu beobachten war. d_{Bruch} ist der arithmetische Mittelwert der Einzelergebnisse der jeweils 25 Schlingentests in mm.

Anhand der Tabelle ist ersichtlich, dass die Vergrößerung der Durchmesser der Streupartikel wegen der Abnahme von d_{Bruch} zu einer leichten Verbesserung der Bruchfestigkeit zu führen scheint. Eine Erhöhung der Anzahl der Inlaystäbe scheint die Bruchfestigkeit allerdings geringfügig herabzusetzen. Der Vergleich zu einer Glasfaser ohne die erfindungsgemäßen Streubereiche, welche einen Wert von d_{Bruch} = 1,25 mm aufweist, belegt allerdings, dass die erfindungsgemäßen seitenemittierenden Stufenindexfasern immer noch eine sehr gute Bruchfestigkeit gewährleisten. Seitenemittierende Stufenindexfasern mit unrunden Kerndurchmessern, wie sie aus dem Stand der Technik bekannt sind, brechen in den Schlingentests bedeutend früher.

Gegenüber den aus dem Stand der Technik bekannten seitenemittierenden Stufenindexfasern haben die erfindungsgemäßen seitenemittierenden Stufenindexfasern darüber hinaus den Vorteil, dass sie effizienter das Licht seitwärts auskoppeln, dass der Effekt der Seitenemission durch die Verwendung der Inlaystäbe (13) für die betreffenden Anwendungen sehr gut skalierbar ist und dass die erfindungsgemäßen seitenemittierenden Stufenindexfasern aufgrund des Materials, aus dem sie bestehen, brandbeständig sind. Daher können sie in Bereichen mit erhöhten Brandschutzbestimmungen eingesetzt werden. Dies sind Anwendungsgebiete, welche insbesondere Fasern aus Kunststoffen verschlossen sind. Mit dem erfindungsgemäßen Verfahren lassen sich Faserbündel beinhaltend die erfindungsgemäßen seitenemittierenden Stufenindexfasern wirtschaftlich maschinell herstellen.

## Patentansprüche

1. Seitenemittierende Stufenindexfaser, beinhaltend einen lichtleitenden Kern (1) aus Glas mit dem Brechungsindex n₁ und einen den Kern entlang der Faserachse (A) umschließenden transparenten und/oder transluzenten Mantel (2) aus Glas mit dem Brechungsindex n₂, wobei n₂ < n₁ gilt,
wobei sich zwischen Kern und Mantel zumindest ein Streubereich (3) befindet, wobei
der Streubereich (3) eine Matrix aus einem Glas welches im wesentlichen den Brechungsindex n₃ aufweist, und in die Matrix eingelagerte Streuzentren aufweist, und mit dem Kern (1) und dem Mantel (2) verschmolzen ist,
**dadurch gekennzeichnet, dass**
der Streubereich (3) ein verschmolzener Bereich mindestens eines Inlaystabes oder Inlayrohres, umfassend die Matrix aus Glas mit dem Brechungsindex n3 und darin eingelagerte Streuzentren, mit einem Kernstab ist,
wobei die Streuzentren Streupartikel
oder
wobei die Streuzentren inhomogene Bereiche des Glases sind, in welches sie eingelagert sind, wobei die inhomogenen Bereiche als phasengetrennte Bereiche oder entmischte Bereiche mit einem Brechungsindex n4 in dem Glas mit dem Brechungsindex n3 vorliegen,
wobei für die Relation zwischen dem Brechungsindex des Glases der Matrix und dem Brechungsindex des Kerns n3 ≥ n1 gilt.

2. Seitenemittierende Stufenindexfaser nach Anspruch 1,
**dadurch gekennzeichnet, dass**
sich zwischen Kern (1) und Mantel (2) zumindest ein Streubereich (3) befindet, der den Kern entlang der Faserachse (A) vollumfänglich umschließt.

3. Seitenemittierende Stufenindexfaser nach Anspruch 1,
**dadurch gekennzeichnet, dass**
sich zwischen Kern (1) und Mantel (2) zumindest ein diskreter Streubereich (3) befindet, der sich auf einem Teilbereich des Kernumfangs entlang der Faserachse (A) erstreckt.

4. Seitenemittierende Stufenindexfaser nach Anspruch 3,
**dadurch gekennzeichnet, dass**
sich zwischen Kern (1) und Mantel (2) mehrere diskrete Streubereiche (3) befinden, die sich jeweils auf einem Teilbereich des Kernumfangs auf Teilbereichen entlang der Faserachse (A) erstrecken.

5. Seitenemittierende Stufenindexfaser nach mindestens einem der vorhergehenden Ansprüche,
**dadurch gekennzeichnet, dass**
die Streupartikel SiO₂ und/oder SiN und/oder BaO und/oder MgO und/oder ZnO und/oder Al₂O₃ und/oder AlN und/oder TiO₂ und/oder ZrO₂ und/oder Y₂O₃ und/oder den Metallen dieser Oxide alleine und/oder BN und/oder B₂O₃ und/oder Ru und/oder Os und/oder Rh und/oder Ir und/oder Ag und/oder Au und/oder Pd und/oder Pt und/oder diamantartigem Kohlenstoff und/oder Glaskeramik-Partikel enthalten.

7. Seitenemittierende Stufenindexfaser nach Anspruch 1,
**dadurch gekennzeichnet, dass**
das Glas, in welches die Streuzentren eingelagert sind, ein As-Pb-haltiges Silikatglas ist und die inhomogenen Bereiche gegenüber der Glasmatrix, in welche sie als Streuzentren eingelagert sind, einen erhöhten Gehalt an Pb und/oder As aufweisen.

8. Seitenemittierende Stufenindexfaser nach mindestens einem der vorhergehenden Ansprüche,
**dadurch gekennzeichnet, dass**
der Durchmesser des lichtleitenden Kerns (1) mehr als 0,4 mm beträgt und die Seitenemittierende Stufenindexfaser als starrer Lichtleitstab ausgebildet ist.

9. Verfahren der Herstellung einer seitenemittierenden Stufenindexfaser nach einem der Ansprüche 1-8 , beinhaltend die Verfahrensschritte
- Bereitstellen eines Kernstabes (11) aus einem Glas mit dem Brechungsindex n₁,
- Anordnen eines Hüllrohres (12) aus einem Glas mit dem Berechungsindex n₂, wobei n₂ < n₁ gilt, so dass sich der Kernstab (11) innerhalb des Hüllrohres (12) befindet und eine Preform (10) erhalten wird,
- Erwärmen der Preform (10),
- Ausziehen der Preform (10) zu einer Glasfaser (22) oder einem Lichtleitstab, **dadurch gekennzeichnet, dass**
zum Erhalten der Preform (10) ferner zumindest ein Inlaystab (13) aus einem Glas mit dem Brechungsindex n₃ zwischen Hüllrohr (12) und Kernstab (11) im wesentlichen parallel zur Kernstabachse angeordnet wird, wobei sich n₃ im wesentlichen von n₂ unterscheidet und wobei in das Glas des Inlaystabes (13) Streuzentren eingelagert sind, und beim Ausziehen der Preform (10) zumindest ein Inlaystab (13) mit dem Kernstab (11) an der Grenzfläche zwischen Inlaystab (13) und Kernstab (11) verschmilzt, so dass zumindest ein Streubereich (3) gebildet wird.

10. Verfahren nach Anspruch 9,
**dadurch gekennzeichnet, dass**
beim Ausziehen der Preform (10) zumindest ein Inlaystab (13) mit dem Kernstab (11) verschmilzt, so dass ein diskreter Streubereich gebildet wird, der sich zumindest auf einem Teilumfang des Faserkerns (1) entlang der Faserachse (A) erstreckt.

11. Verfahren nach einem der Ansprüche 9 bis 10 ,
**dadurch gekennzeichnet, dass**
die Preform (10) eine Mehrzahl von Inlaystäben (13) enthält, welche beim Ausziehen der Preform (10) sowohl mit dem Kernstab (11) als auch miteinander verschmelzen, so dass zumindest ein Streubereich (3) gebildet wird, der den Faserkern (1) entlang der Faserachse (A) vollumfänglich umschließt.

12. Verwendung zumindest einer seitenemittierenden Stufenindexfaser nach einem der Ansprüche 1 bis 8 zusammen mit anderen Lichtleitern und/oder anderen seitenemittierenden Stufenindexfasern nach einem der Ansprüche 1 bis 8 in einem Faserbündel.

13. Verwendung nach Anspruch 12 als starrer Faserstab.

14. Verwendung nach Anspruch 12 in einem flexiblen Faserbündel, um das bevorzugt ein in zumindest Teilbereichen transparenter und/oder transluzenter Kunststoff extrudiert ist und/oder welches in einem transparenten und/oder transluzenten Kunststoffprofil eingeschlaucht oder eingelegt ist.

15. Verwendung nach einem der Ansprüche 12 bis 14 in Flächengebilden.

16. Verwendung nach einem der Ansprüche 12 bis 15 zur Konturbeleuchtung von Fahrzeugen und/oder als Teil von Innenverkleidungen (30) von Fahrzeugen, insbesondere von Automobilen, Flugzeugen, Schiffen und/oder Zügen.

## Claims

1. Side-emitting step index fiber including a light-guiding core (1) made from glass with the refractive index n₁, and a transparent and/or translucent cladding (2) that is made from glass with the refractive index n₂ and encloses the core along the fiber axis (A), wherein n₂ < n₁,
wherein located between core and cladding is at least one scattering region (3), wherein
the scattering region (3) has a matrix made from a glass that substantially has the refractive index n₃, and has scattering centers embedded in the matrix, and is fused with the core (1) and the cladding (2),
**characterized in that**
the scattering region (3) is a fused region of at least one inlay rod or inlay tube, comprising the matrix that is made of glass with the refractive index n3 and scattering centers embedded therein, with a core rod,
wherein the scattering centers are scattering particles
or
wherein the scattering centers are inhomogeneous regions of the glass in which they are embedded, wherein the inhomogeneous regions are present in the form of phase-separated regions or demixed regions with a refractive index n4 in the glass with the refractive index n3,
wherein, for the relation between the refractive index of the glass of the matrix and the refractive index of the core, n3 ≥ n1.

2. Side-emitting step index fiber according to Claim 1,
**characterized in that**
located between core (1) and cladding (2) is at least one scattering region (3) that encloses the entire periphery of the core along the fiber axis (A) .

3. Side-emitting step index fiber according to Claim 1,
**characterized in that**
located between core (1) and cladding (2) is at least one discrete scattering region (3) that extends on a subregion of the core periphery along the fiber axis (A).

4. Side-emitting step index fiber according to Claim 3,
**characterized in that**
located between core (1) and cladding (2) are a plurality of discrete scattering regions (3) that respectively extend on a subregion of the core periphery on subregions along the fiber axis (A).

5. Side-emitting step index fiber according to at least one of the preceding claims,
**characterized in that**
the scattering particles include SiO₂ and/or SiN and/or BaO and/or MgO and/or ZnO and/or Al₂O₃ and/or AlN and/or TiO₂ and/or ZrO₂ and/or Y₂O₃ and/or the metals of these oxides alone and/or BN and/or B₂O₃ and/or Ru and/or Os and/or Rh and/or Ir and/or Ag and/or Au and/or Pd and/or Pt and/or diamond-like carbon and/or glass-ceramic particles.

7. Side-emitting step index fiber according to Claim 1,
**characterized in that**
the glass in which the scattering centers are embedded is an As-Pb-containing silicate glass, and the inhomogeneous regions have an increased content of Pb and/or As by comparison with the glass matrix in which they are embedded as scattering centers.

8. Side-emitting step index fiber according to at least one of the preceding claims,
**characterized in that**
the diameter of the light-guiding core (1) is more than 0.4 mm, and the side-emitting step index fiber is designed as rigid light-guiding rod.

9. Method of producing a side-emitting step index fiber according to one of Claims 1-8, including the method steps of
- providing a core rod (11) made from a glass with the refractive index n₁,
- arranging an envelope tube (12) made from a glass with the refractive index n₂, wherein n₂ < n₁, such that the core rod (11) is located within the envelope tube (12) and a preform (10) is obtained,
- heating the preform (10),
- drawing out the preform (10) to form a glass fiber (22) or a light-guiding rod,
**characterized in that**,
furthermore, in order to obtain the preform (10) at least one inlay rod (13) made from a glass with the refractive index n₃ is arranged between envelope tube (12) and core rod (11) in a fashion substantially parallel to the core rod axis, n₃ differing substantially from n₂ and scattering centers being embedded in the glass of the inlay rod (13), and during the drawing-out of the preform (10) at least one inlay rod (13) fuses with the core rod (11) at the interface between inlay rod (13) and core rod (11), such that at least one scattering region (3) is formed.

10. Method according to Claim 9,
**characterized in that**
while the preform (10) is being drawn out at least one inlay rod (13) fuses with the core rod (11) so as to form a discrete scattering region that extends along the fiber axis (A) at least on a part of the periphery of the fiber core (1).

11. Method according to either of Claims 9 and 10,
**characterized in that**
the preform (10) includes a plurality of inlay rods (13) that fuse as the preform (10) is being drawn out both with the core rod (11) and with one another so as to form at least one scattering region (3) that encloses the entire periphery of the fiber core (1) along the fiber axis (A).

12. Use in a fiber bundle of at least one side-emitting step index fiber according to one of Claims 1 to 8 together with other optical waveguides and/or other side-emitting step index fibers according to one of Claims 1 to 8.

13. Use according to Claim 12 as a rigid fiber rod.

14. Use according to Claim 12 in a flexible fiber bundle around which a plastic that is transparent and/or translucent at least in subregions is preferably extruded, and/or which is laid tubewise or inserted loosely in a transparent and/or translucent plastic profile.

15. Use according to one of Claims 12 to 14 in sheets.

16. Use according to one of Claims 12 to 15, for contour lighting of vehicles and/or as part of inner linings (30) of vehicles, in particular of automobiles, aircraft, ships and/or trains.

## Revendications

1. Fibre optique à saut d'indice à émission latérale, contenant une âme (1) conductrice optique en verre ayant un indice de réfraction n₁ et une gaine (2) transparente et/ou translucide, enveloppant l'âme le long de l'axe de la fibre (A), en verre ayant un indice de réfraction n₂, avec n₂ < n₁,
au moins une zone de dispersion (3) se trouvant entre l'âme et la gaine,
la zone de dispersion (3) possédant une matrice constituée d'un verre qui présente sensiblement l'indice de réfraction n₃ et possédant dans la matrice des centres de dispersion incorporés et étant fusionnée avec l'âme (1) et la gaine (2),
**caractérisée en ce que**
la zone de dispersion (3) est une zone fondue d'au moins une tige incrustée ou d'un tube incrusté, comprenant la matrice en verre ayant l'indice de réfraction n₃ et les centres de dispersion qui y sont incorporés, avec une tige d'âme,
les centres de dispersion étant des particules de dispersion
ou
les centres de dispersion étant des zones non homogènes du verre dans lequel ils sont incorporés, les zones non homogènes se trouvant dans le verre ayant l'indice de réfraction n₃ sous la forme de zones séparées en phases ou de zones dissociées ayant un indice de réfraction n₄, n₃ ≥ n₁ s'appliquant à la relation entre l'indice de réfraction du verre de la matrice et l'indice de réfraction de l'âme.

2. Fibre optique à saut d'indice à émission latérale selon la revendication 1, **caractérisée en ce qu'**entre l'âme (1) et la gaine (2) se trouve au moins une zone de dispersion (3) qui enveloppe l'âme sur la totalité de son pourtour le long de l'axe de la fibre (A).

3. Fibre optique à saut d'indice à émission latérale selon la revendication 1, **caractérisée en ce qu'**entre l'âme (1) et la gaine (2) se trouve au moins une zone de dispersion (3) discrète qui s'étend sur une zone partielle du pourtour de l'âme le long de l'axe de la fibre (A).

4. Fibre optique à saut d'indice à émission latérale selon la revendication 3, **caractérisée en ce qu'**entre l'âme (1) et la gaine (2) se trouvent plusieurs zones de dispersion (3) discrètes qui s'étendent respectivement sur une zone partielle du pourtour de l'âme sur des zones partielles le long de l'axe de la fibre (A).

5. Fibre optique à saut d'indice à émission latérale selon au moins l'une des revendications précédentes, **caractérisée en ce que** les particules de dispersion contiennent du SiO₂ et/ou du SiN et/ou du BaO et/ou du MgO et/ou du ZnO et/ou de l'Al₂O₃ et/ou de l'AlN et/ou du TiO₂ et/ou du ZrO₂ et/ou de l'Y₂O₃ et/ou des métaux de ces oxydes seuls et/ou du BN et/ou du B₂O₃ et/ou du Ru et/ou de l'Os et/ou du Rh et/ou de l'Ir et/ou de l'Ag et/ou de l'Au et/ou du Pd et/ou du Pt et/ou du carbone diamantin et/ou des particules de vitrocéramique.

7. Fibre optique à saut d'indice à émission latérale selon la revendication 1, **caractérisée en ce que** le verre dans lequel sont incorporés les centres de dispersion est un verre de silicate contenant de l'As-Pb et les zones non homogènes possèdent une teneur en Pb et/ou en As accrue par rapport à la matrice de verre dans laquelle elles sont incorporées en tant que centres de dispersion.

8. Fibre optique à saut d'indice à émission latérale selon au moins l'une des revendications précédentes, **caractérisée en ce que** le diamètre de l'âme (1) conductrice optique est supérieure à 0,4 mm et la fibre optique à saut d'indice à émission latérale est réalisée sous la forme d'une tige optique rigide.

9. Procédé de fabrication d'une fibre optique à saut d'indice à émission latérale selon l'une des revendications 1 à 8, contenant les étapes de procédé suivantes
- fourniture d'une tige d'âme (11) en un verre ayant l'indice de réfraction n₁,
- disposition d'un tube d'enveloppe (12) en un verre ayant l'indice de réfraction n₂, avec n₂ < n₁, de sorte que la tige d'âme (11) se trouve à l'intérieur du tube d'enveloppe (12) et qu'une préforme (10) soit obtenue,
- chauffage de la préforme (10),
- étirage de la préforme (10) en une fibre de verre (22) ou une tige optique,
**caractérisé en ce que**
pour obtenir la préforme (10), au moins une tige incrustée (13) en un verre ayant l'indice de réfraction n₃ est en outre disposée entre le tube d'enveloppe (12) et la tige d'âme (11) sensiblement parallèlement à l'axe de la tige d'âme, n₃ étant sensiblement différent de n₂ et des centres de dispersion étant incorporés dans le verre de la tige incrustée (13), et lors de l'étirage de la préforme (10) au moins une tige incrustée (13) fusionnant avec la tige d'âme (11) au niveau de la surface limite entre la tige incrustée (13) et la tige d'âme (11), de sorte qu'au moins une zone de dispersion (3) est formée.

10. Procédé selon la revendication 9, **caractérisé en ce que** lors de l'étirage de la préforme (10), au moins une tige incrustée (13) fusionne avec la tige d'âme (11) de sorte qu'une zone de dispersion discrète est formée, laquelle s'étend au moins sur un pourtour partiel de l'âme de fibre (1) le long de l'axe de la fibre (A).

11. Procédé selon l'une des revendications 9 et 10, **caractérisé en ce que** la préforme (10) contient une pluralité de tiges incrustées (13) qui, lors de l'étirage de la préforme (10), fusionnent à la fois avec la tige d'âme (11) et entre elles, de sorte qu'au moins une zone de dispersion (3) est formée, laquelle enveloppe l'âme de fibre (1) sur la totalité de son pourtour le long de l'axe de la fibre (A).

12. Utilisation d'au moins une fibre optique à saut d'indice à émission latérale selon l'une des revendications 1 à 8 conjointement avec d'autres fibres optiques et/ou d'autres fibres optiques à saut d'indice à émission latérale selon l'une des revendications 1 à 8 dans un faisceau de fibres.

13. Utilisation selon la revendication 12 en tant que tige de fibre rigide.

14. Utilisation selon la revendication 12 dans un faisceau de fibres flexible autour duquel est de préférence extrudée au moins dans des zones partielles une matière plastique transparente et/ou translucide et/ou lequel est enfilé ou incorporé dans un profilé en matière plastique transparent et/ou translucide.

15. Utilisation selon l'une des revendications 12 à 14 dans des produits plats.

16. Utilisation selon l'une des revendications 12 à 15 pour l'éclairage du contour de véhicules et/ou en tant que partie d'habillages intérieurs (30) de véhicules, notamment d'automobiles, d'aéronefs, de navires et/ou de trains.
